# EUROPEAN PATENT SPECIFICATION

(11) **EP 3 825 744 B1**
(45) Date of publication and mention of the grant of the patent: **31.01.2024**
(21) Application number: 21150161.4
(22) Date of filing: 13.06.2017
(51) Int. Cl.: G02B 6/124, B42D 25/328, G02B 5/18, G09F 3/02

(54) **LIGHT GUIDE FILM, STRUCTURE FOR COUNTERFEIT PREVENTION, AND COUNTERFEIT-PROOF ARTICLE**
LICHTLEITFOLIE, STRUKTUR ZUR FÄLSCHUNGSVERHINDERUNG UND FÄLSCHUNGSSICHERER GEGENSTAND
FILM GUIDE DE LUMIÈRE, STRUCTURE POUR LA PRÉVENTION DES CONTREFAÇONS ET ARTICLE ANTI-CONTREFAÇON

(30) Priority: 13.06.2016 JP 2016116873
(43) Date of publication of application: 26.05.2021
(62) Divisional of application: 17813323.7
(73) Proprietor: Dai Nippon Printing Co., Ltd., Shinjuku-ku, Tokyo 162-8001 (JP)
(72) Inventor: AOYAMA, Yuko, Tokyo 162-8001 (JP); SATO, Jun, Tokyo 162-8001 (JP)
(74) Representative: Müller-Boré & Partner Patentanwälte PartG mbB

(56) References cited:
- WO-A1-2015/096859
- US-A1- 2013 056 972
- US-A1- 2015 145 239

## Description

### [Technical Field]

The present invention relates to a light guide film for counterfeit prevention and authenticity determination, a structure for counterfeit prevention for imparting a counterfeit prevention function to a desired article, and a counterfeit-proof article imparted with a counterfeit prevention function.

### [Background Art]

Recently, in articles that require a counterfeit prevention function including paper currency, passports, identification cards, securities such as gift certificates and credit cards, tags attached to so-called brand-name items, and package seals, light guide films are used as means for counterfeit prevention and authenticity determination. For example, a conventional light guide film includes a waveguide and an incidence portion and an emission portion provided in the waveguide and, when light is incident to the incidence portion, light is emitted in a desired pattern from the emission portion. By checking the light emitted from the emission portion either visually or by using a verification device enables the authenticity of a counterfeit-proof article provided with the light guide film to be determined. When using such a light guide film, for example, the light guide film is embedded in a counterfeit-proof article so as to expose the incidence portion and the emission portion or a process such as printing is applied to the light guide film so as to expose the incidence portion and the emission portion.

In addition, depending on a relationship with a color scheme of a printed pattern visible from a surface of a counterfeit-proof article or other counterfeit preventing means such as a hologram concurrently provided on the counterfeit-proof article, there may be cases where a pattern of light emitted from the emission portion of the light guide film is required to be displayed in a desired color. In order to accommodate such requests, a light guide film is developed in which a light-emitting dye is disposed inside a waveguide or in an incidence portion or an emission portion of the light guide film and a pattern of light emitted from the emission portion is displayed in a desired color or displayed as a multicolor image in order to enhance a counterfeit prevention effect (PTL 1).

PTL 2 discloses a security document comprising a substrate consisting of a laminate of a first paper layer, a second paper layer and a waveguide in the form of a transparent plastics layer between them. Two windows are provided in the substrate and they are formed by holes in the two paper layers. The waveguide extends through both of them and, at the location of the window, couplers are provided in the waveguide for coupling light into and out of the waveguide. The couplers can be formed e.g. by gratings, scattering objects, holograms, luminescent dyes or perforations. The authenticity of the document can be verified using methods based on the properties of the waveguide.

### [Citation List]

### [Patent Literature]

[PTL 1] Japanese Translation of PCT Application No. 2013-514200
[PTL 2] US 2015/0145239 A1

### [Summary of Invention]

### [Technical Problem]

However, a conventional light guide film in which a light-emitting dye is disposed has a problem in that, due to degradation over time of the light-emitting dye, a counterfeit prevention function is not stably exhibited in a period of use set to an article as an object to which the counterfeit prevention function is to be imparted. In addition, even when the light-emitting dye does not degrade over time, in a case where the light-emitting dye is colored, a location where a light guide film is disposed or a pattern to be displayed is readily assessed even when light is not incident to an incidence portion, which is unfavorable in terms of counterfeit prevention. Therefore, since the use of a colorless or a nearly colorless light-emitting dye is required, there is a problem in that a range of choice of dyes is extremely narrow and material cost increases. Furthermore, light intensity of light to be incident to the incidence portion must be equal to or greater than light intensity of light that causes the light-emitting dye to emit light. While such light intensity can be readily obtained when a laser is used as a light source, it is difficult to cause the light-emitting dye to emit light using, for example, white light from an LED light source with relatively low light intensity. Therefore, the fact that authenticity determination by a conventional light guide film requires the use of a verification device such as a laser light source is a hindrance in determining the authenticity of a counterfeit-proof article in a simple manner. Another problem is that adding a step of disposing the light-emitting dye when manufacturing the light guide film increases manufacturing cost.

The present invention has been made in consideration of actual circumstances such as described above, and an object thereof is to provide a light guide film which is capable of displaying a pattern of light emitted from an emission portion in a desired color or as a multicolor image and which is capable of stably exhibiting a counterfeit prevention function, and a structure for counterfeit prevention and a counterfeit-proof article using the light guide film.

### [Solution to Problem]

In order to achieve the object described above, the present invention provides a light guide film including: a substrate film; a coating layer positioned in at least a part of one surface of the substrate film; an incidence portion which causes light in a specific wavelength range in incident light from outside to be incident to the inside of the substrate film; and an emission portion which emits, to the outside, the light in the specific wavelength range having been incident from the incidence portion and guided inside the substrate film, wherein the incidence portion is constituted by a diffraction structure having irregularities in a thickness direction of the substrate film in a desired part of the coating layer.

The emission portion may be constituted by a diffraction structure having irregularities in a thickness direction of the substrate film in a desired part of the coating layer.

In addition, the present invention provides a light guide film including: a substrate film; a coating layer positioned in at least a part of one surface of the substrate film; an incidence portion which causes incident light from outside to be incident to the inside of the substrate film; and an emission portion which emits, to the outside, light in a specific wavelength range in light that has been incident from the incidence portion and guided inside the substrate film, wherein the emission portion is constituted by a diffraction structure having irregularities in a thickness direction of the substrate film in a desired part of the coating layer.

The incidence portion may be at least one of: an incidence portion constituted by a diffraction structure having irregularities in a thickness direction of the substrate film in a desired part of the coating layer; an incidence portion constituted by a reflection layer positioned at any of a desired part of the coating layer, a desired interlayer part between the coating layer and the substrate film, and a desired part on a surface opposite to the one surface of the substrate film; an incidence portion constituted by an irregular structure positioned in a desired part of the coating layer; an incidence portion that is a desired part of the coating layer; and an incidence portion that is a desired part of the substrate film.

The coating layer may have a plurality of the emission portions, and in at least a part of the plurality of the emission portions, wavelength ranges of emitted light may differ from each other among the emission portions, and the coating layer may have a plurality of the incidence portions, and in at least a part of the plurality of the incidence portions, wavelength ranges of light caused to be incident to the inside of the substrate film may differ from each other among the incidence portions. The plurality of incidence portions may be adjacent to one another, and the plurality of emission portions may be adjacent to one another.

A high refractive index layer having a higher refractive index than a refractive index of the coating layer may be provided, the high refractive index layer being at least positioned: on the coating layer; between the coating layer and the substrate film; or on a surface opposite to the one surface of the substrate film.

The present invention provides a light guide film including: a substrate film including one surface and a surface opposite to the one surface; an incidence portion which causes light in a specific wavelength range to be incident to the inside of the substrate film; and an emission portion which emits, to the outside, the light in the specific wavelength range having been incident from the incidence portion and guided inside the substrate film, wherein the incidence portion is constituted by a diffraction structure which is provided in a desired part of the substrate film and which has irregularities in a thickness direction of the substrate film.

The emission portion can be constituted by a diffraction structure which is provided in a desired part of the substrate film and which has irregularities in a thickness direction of the substrate film.

The present invention provides a light guide film including: a substrate film including one surface and a surface opposite to the one surface; an incidence portion which causes incident light from outside to be incident to the inside of the substrate film; and an emission portion which emits, to the outside, light in a specific wavelength range in light that has been incident from the incidence portion and guided inside the substrate film, wherein the emission portion is constituted by a diffraction structure which is provided in a desired part of the substrate film and which has irregularities in a thickness direction of the substrate film.

The incidence portion can be constituted by at least one of: a diffraction structure which is provided in a desired part of the substrate film and which has irregularities in a thickness direction of the substrate film; a reflection layer positioned in a desired part on the one surface of the substrate film or a desired part on a surface opposite to the one surface of the substrate film; an irregular structure positioned in a desired part of the substrate film; and a desired part of the substrate film.

The substrate film may be provided with a plurality of the emission portions, at least a part of the plurality of the emission portions may be capable of emitting light in mutually different wavelength ranges, and the plurality of the emission portions may be adjacent to one another.

The substrate film may be provided with a plurality of the incidence portions, at least a part of the plurality of the incidence portions may be capable of causing incidence of light in mutually different wavelength ranges, and the plurality of the incidence portions may be adjacent to one another.

A high refractive index layer having a higher refractive index than a refractive index of the substrate film can be provided on the one surface of the substrate film or a surface opposite to the one surface of the substrate film, and the incidence portion and the emission portion may be provided on the one surface of the substrate film.

The present invention provides a structure for counterfeit prevention including: the light guide film described above; and an adhesion layer positioned on an outermost surface of the light guide film on a side of the coating layer.

The adhesion layer can be provided on a substrate film side of the light guide film, and a release layer may be interposed between the substrate film and the coating layer of the light guide film.

The present invention provides a structure for counterfeit prevention including: the light guide film described above; and an adhesion layer positioned on one surface of the substrate film.

An adhesion layer positioned on a surface opposite to the one surface of the substrate film can be further provided.

The present invention provides a counterfeit-proof article including the light guide film according to claim 1 and a counterfeit-proof article including the structure according to claim 7.

The present invention provides a counterfeit-proof article according to claim 10 or 11 including a laminated body in which at least a transparent base and a light guide film are laminated, wherein the light guide film includes: a transparent substrate film; an incidence portion which causes light in a specific wavelength range to be incident to the inside of the substrate film; and an emission portion which emits, to the outside, the light in the specific wavelength range having been incident from the incidence portion and guided inside the substrate film, and the incidence portion is constituted by a diffraction structure which is provided in a desired part of the substrate film and which has irregularities in a thickness direction of the substrate film.

### [Advantageous Effects of Invention]

The present invention can provide a light guide film which is capable of displaying a pattern of light emitted from an emission portion in a desired color or as a multicolor image and which is capable of stably exhibiting a counterfeit prevention function, and a structure for counterfeit prevention and a counterfeit-proof article using the light guide film.

### [Brief Description of Drawings]

[Fig. 1]

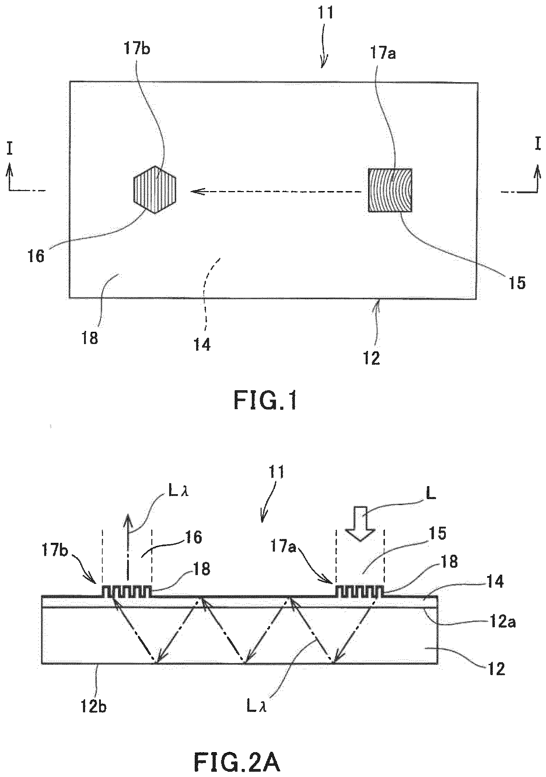

   Fig. 1 is a plan view showing an embodiment of a light guide film according to the present invention.
[Fig. 2A]
   Fig. 2A is a schematic sectional view taken along line I-I of the light guide film shown in Fig. 1.
[Fig. 2B]

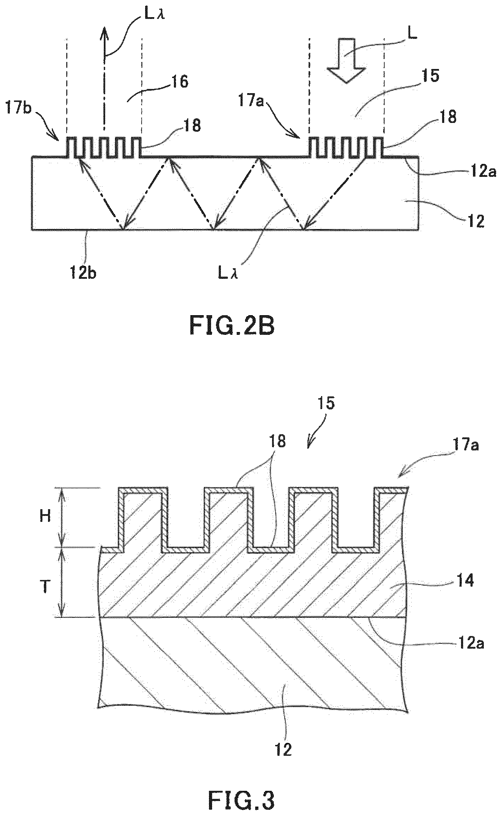

   Fig. 2B is a schematic sectional view which shows another embodiment of the light guide film according to the present invention and which corresponds to Fig. 2A.
[Fig. 3]
   Fig. 3 is a partially enlarged sectional view of the light guide film shown in Fig. 1.
[Fig. 4]

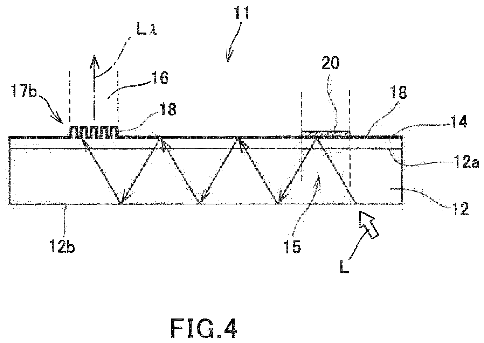

   Fig. 4 is a schematic sectional view which shows another embodiment of the light guide film according to the present invention and which corresponds to Fig. 2A.
[Fig. 5A]

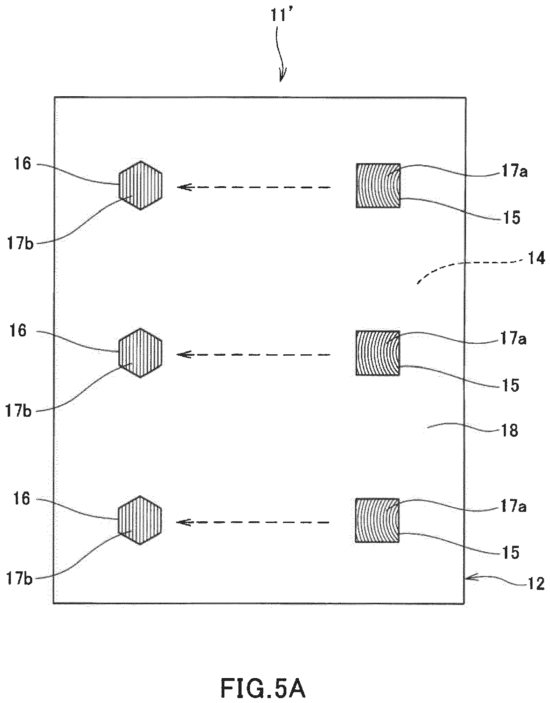

   Fig. 5A is a plan view showing another embodiment of the light guide film according to the present invention.
[Fig. 5B]

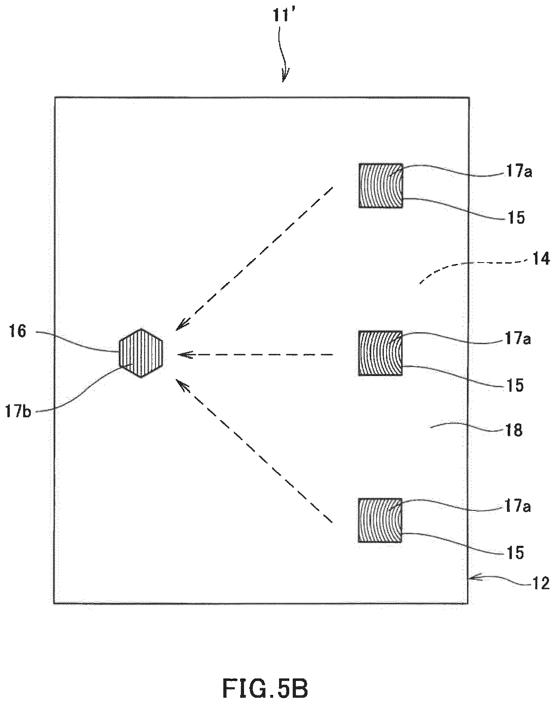

   Fig. 5B is a plan view showing another embodiment of the light guide film according to the present invention.
[Fig. 6]

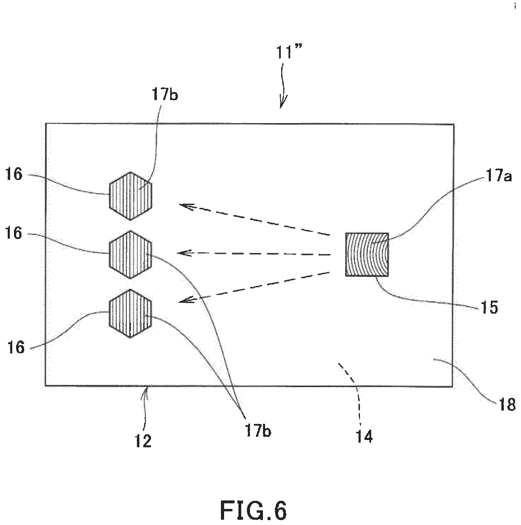

   Fig. 6 is a plan view showing another embodiment of the light guide film according to the present invention.
[Fig. 7]

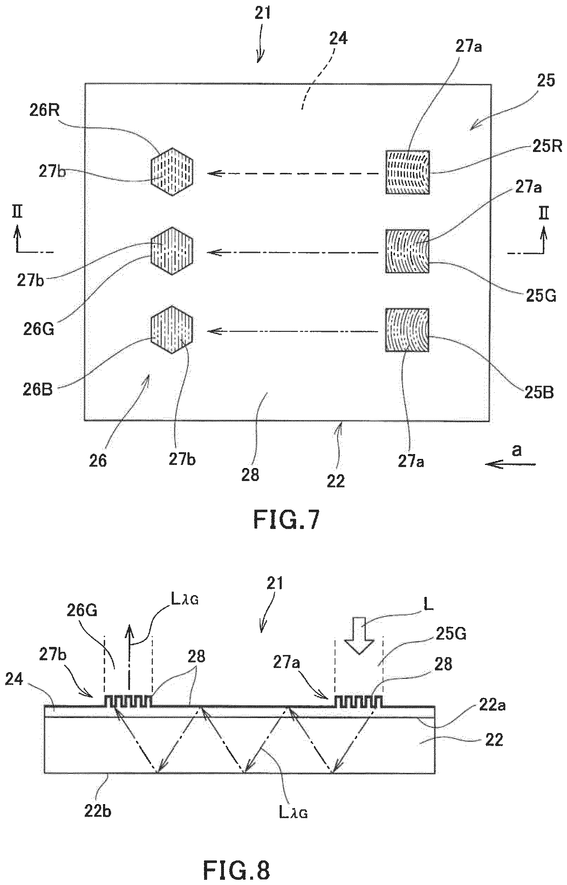

   Fig. 7 is a plan view showing another embodiment of the light guide film according to the present invention.
[Fig. 8]
   Fig. 8 is a schematic sectional view taken along line II-II of the light guide film shown in Fig. 7.
[Fig. 9]

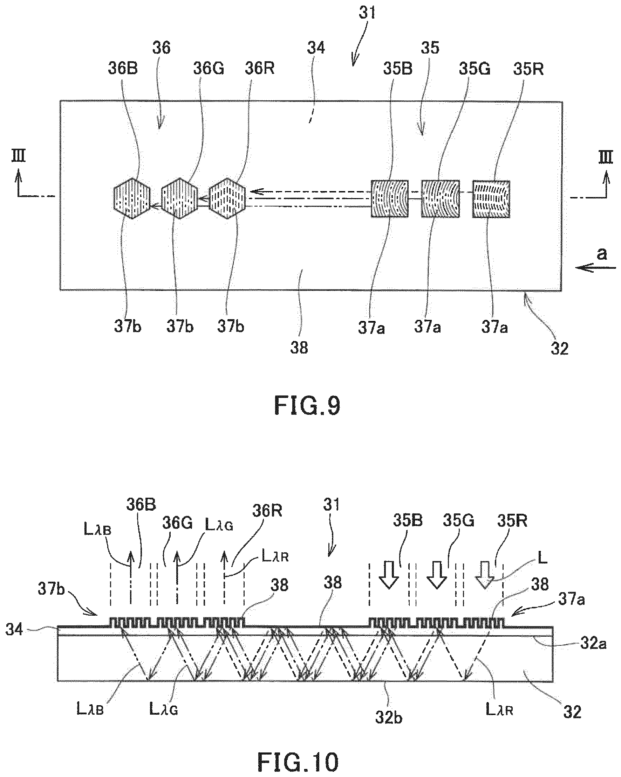

   Fig. 9 is a plan view showing another embodiment of the light guide film according to the present invention.
[Fig. 10]
   Fig. 10 is a schematic sectional view taken along line III-III of the light guide film shown in Fig. 9.
[Fig. 11]

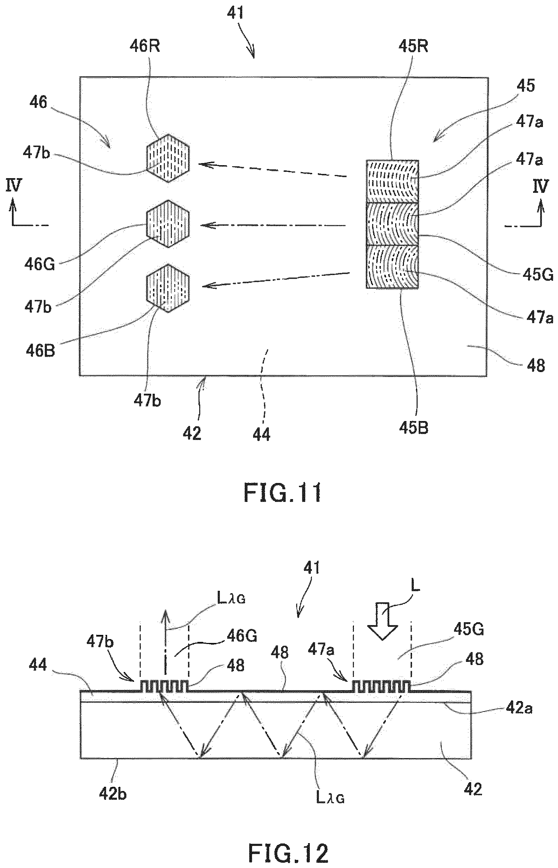

   Fig. 11 is a plan view showing another embodiment of the light guide film according to the present invention.
[Fig. 12]
   Fig. 12 is a schematic sectional view taken along line IV-IV of the light guide film shown in Fig. 11.
[Fig. 13]

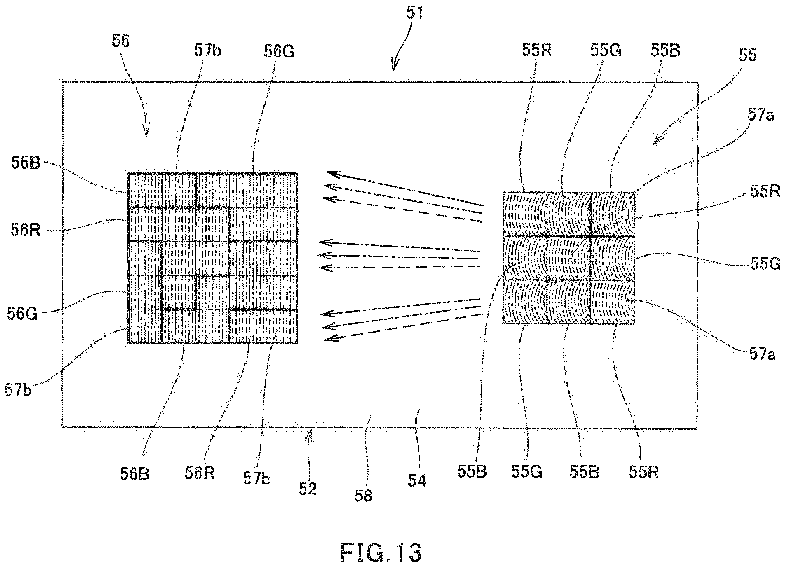

   Fig. 13 is a plan view showing another embodiment of the light guide film according to the present invention.
[Fig. 14]

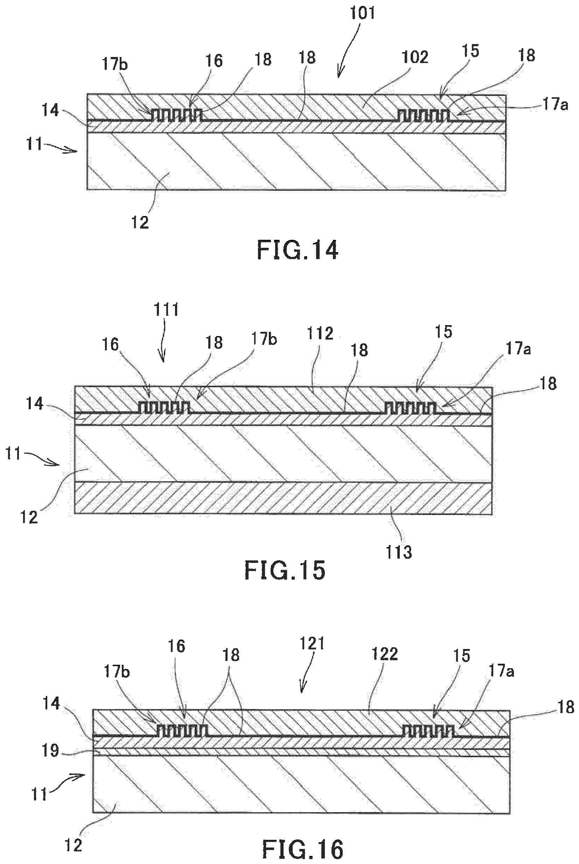

   Fig. 14 is a schematic sectional view showing an embodiment of a structure for counterfeit prevention according to the present invention.
[Fig. 15]
   Fig. 15 is a schematic sectional view showing another embodiment of the structure for counterfeit prevention according to the present invention.
[Fig. 16]
   Fig. 16 is a schematic sectional view showing another embodiment of the structure for counterfeit prevention according to the present invention.
[Fig. 17]

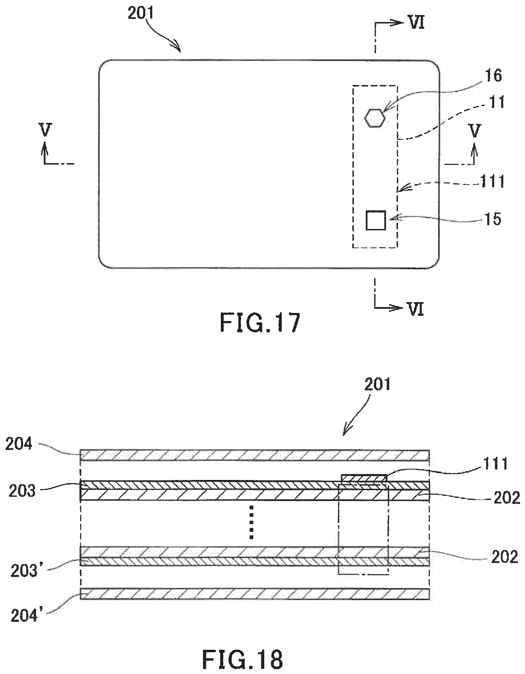

   Fig. 17 is a plan view showing an embodiment of a counterfeit-proof article according to the present invention.
[Fig. 18]
   Fig. 18 is a schematic sectional view which is taken along line V-V of the counterfeit-proof article shown in Fig. 17 and in which a part of a constituent layer is separated.
[Fig. 19]

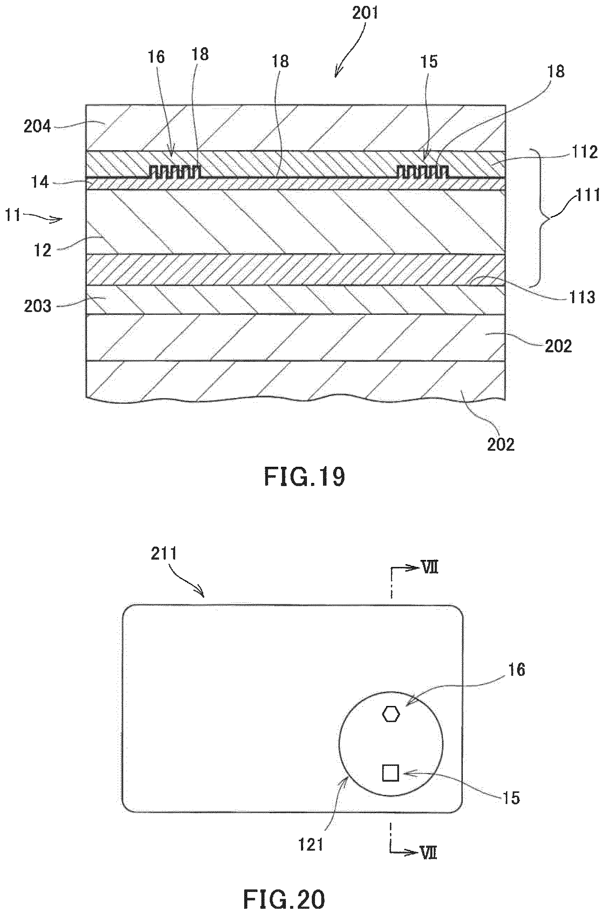

   Fig. 19 is a partially enlarged sectional view taken along line VI-VI of the counterfeit-proof article shown in Fig. 17.
[Fig. 20]
   Fig. 20 is a plan view showing another embodiment of the counterfeit-proof article according to the present invention.
[Fig. 21]

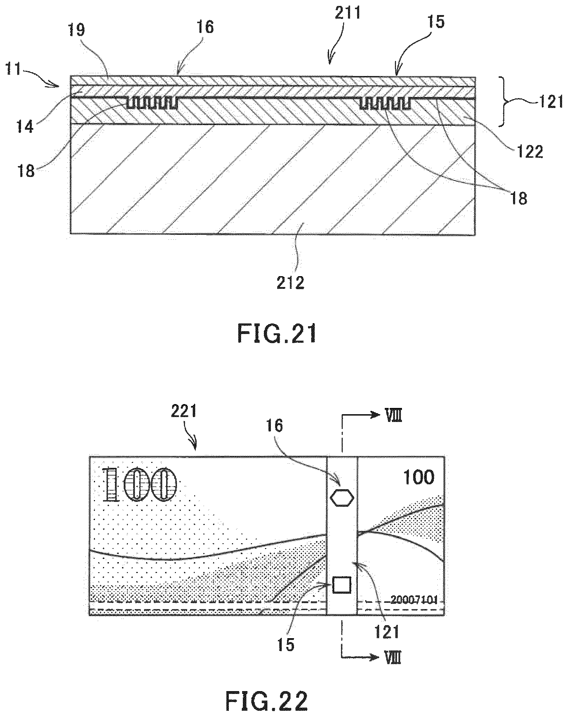

   Fig. 21 is a partially enlarged sectional view taken along line VII-VII of the counterfeit-proof article shown in Fig. 20.
[Fig. 22]
   Fig. 22 is a plan view showing paper currency which represents a specific example of another embodiment of the counterfeit-proof article according to the present invention.
[Fig. 23]

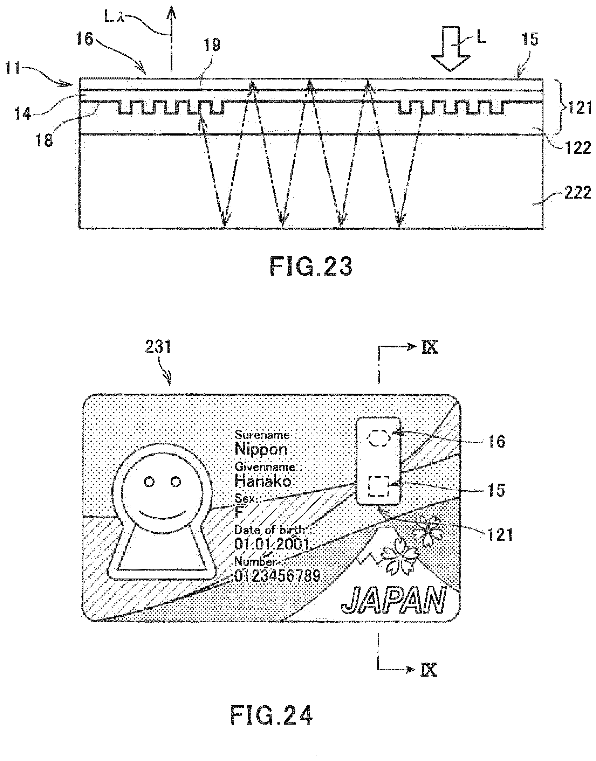

   Fig. 23 is a partially enlarged sectional view taken along line VIII-VIII of the counterfeit-proof article shown in Fig. 22.
[Fig. 24]
   Fig. 24 is a plan view showing an ID card which represents a specific example of another embodiment of the counterfeit-proof article according to the present invention.
[Fig. 25]

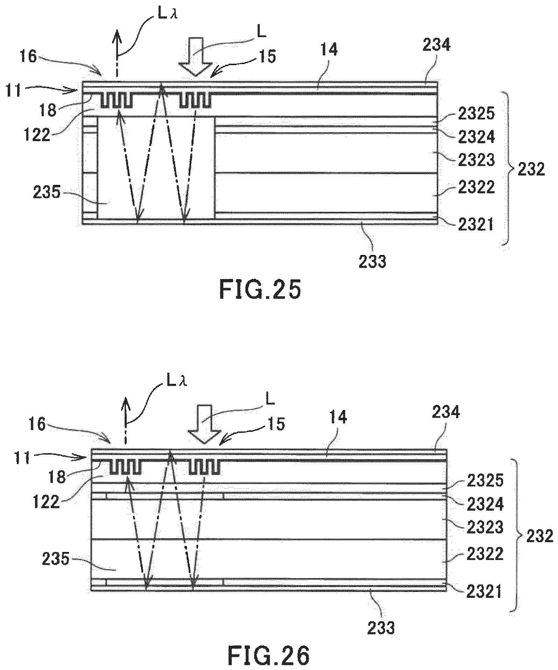

   Fig. 25 is a sectional view taken along line IX-IX of the counterfeit-proof article shown in Fig. 24.
[Fig. 26]
   Fig. 26 is a sectional view which shows another mode of the counterfeit-proof article shown in Fig. 24 and which is taken along a line corresponding to line IX-IX in Fig. 24.
[Fig. 27]

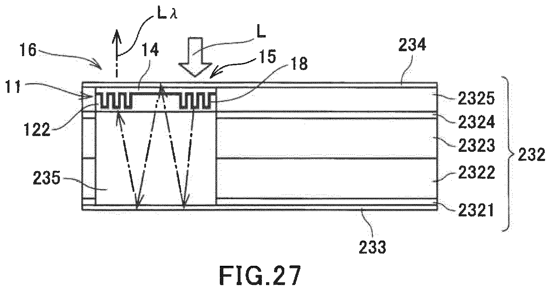

   Fig. 27 is a sectional view which shows another mode of the counterfeit-proof article shown in Fig. 24 and which is taken along a line corresponding to line IX-IX in Fig. 24.

### [Description of Embodiments]

Hereinafter, embodiments of the present invention will be described with reference to the drawings.

It should be noted that the drawings are schematic or conceptual, the dimensions of each member, the size ratio between the members, and the like are not necessarily the same as actual values thereof, and the same members and the like may be shown with respectively different dimensions or ratios depending on the drawings.

### [Light guide film]

Fig. 1 is a plan view showing an embodiment of a light guide film according to the present invention, Fig. 2A is a schematic sectional view taken along line I-I of the light guide film shown in Fig. 1, and Fig. 3 is a partially enlarged sectional view of an incidence portion of the light guide film.

In Figs. 1 to 3, a light guide film 11 includes a substrate film 12, a coating layer 14 positioned on one surface 12a of the substrate film 12, and a high refractive index layer 18 positioned on the coating layer 14. Note that, in Fig. 2A, in order to prevent the drawing from becoming overcomplicated, hatched lines indicating a cross section are omitted and the high refractive index layer 18 is indicated by a bold line.

The substrate film 12 is a material having a higher refractive index than outside and examples thereof include resin films such as polycarbonate, polyethylene terephthalate, polyvinyl chloride, polypropylene, acrylic, cycloolefin, polyester, polystyrene, and acrylic styrene. In this case, outside refers to an atmosphere or a material with which another surface 12b of the substrate film 12 comes into contact in a state where the light guide film 11 is being used. This definition will similarly apply to the description below.

When the light guide film 11 is used in a state where the substrate film 12 is retained, the substrate film 12 must exhibit a function of guiding light incident from an incidence portion 15 to be described later. In this case, a thickness of the substrate film 12 can be set in consideration of the refractive index of the substrate film 12, a wavelength of light incident from the incidence portion 15, and the like and can be appropriately set within a range of, for example, 5 to 400 µm.

The coating layer 14 constituting the light guide film 11 has the incidence portion 15 and an emission portion 16. The incidence portion 15 has a diffraction structure 17a having irregularities in a thickness direction of the substrate film 12, and the emission portion 16 has a diffraction structure 17b having irregularities in the thickness direction of the substrate film 12. The incidence portion 15 exhibits a function of causing light L_{λ} in a specific wavelength range in incident light L from the outside to be incident to the inside of the substrate film 12. For example, when white light is incident to the incidence portion 15, the incidence portion 15 exhibits a function of causing light L_{λ} in a specific wavelength range to be incident to the inside of the substrate film 12. Obviously, when incident light L_{λ} in a specific wavelength range which the incidence portion 15 may cause to be incident to the inside of the substrate film 12 is caused to be incident to the incidence portion 15 from the outside, the light L_{λ} in the specific wavelength range is incident to the inside of the substrate film 12. Furthermore, a plurality of periodic structures of which periods of irregularities differ from one another may be present in the diffraction structure 17a at one location which constitutes the incidence portion 15 and may cause white light incident to the incidence portion 15 to be incident as-is to the inside of the substrate film 12.

In addition, the emission portion 16 exhibits a function of emitting light L_{λ} having been guided inside the substrate film 12 to the outside. Furthermore, a plurality of periodic structures of which periods of irregularities differ from one another may be present in the diffraction structure 17b at one location which constitutes the emission portion 16, and the light emitted from the emission portion 16 may be a color mixture of light in different wavelength ranges.

On the coating layer 14 configured as described above, the high refractive index layer 18 having a higher refractive index than the coating layer 14 is provided as shown in Fig. 3.

The coating layer 14 can be formed by fabricating an original plate of a diffraction grating (a diffraction structure) that is a periodic structure of a linear pattern by, for example, photolithography, electron lithography, imprint lithography, or the like, fabricating a plate made of resin using the original plate, and shaping the diffraction structure in a transparent material formed on the substrate film 12. Examples of the transparent material for forming the coating layer 14 include resin materials conventionally used to form a relief-type hologram or the like such as cured products of a thermosetting resin, an ultraviolet curable resin, an ionizing radiation curable resin, and other hardening resins, thermoplastic resins, and the like.

Examples of the thermosetting resin described above include unsaturated polyester resin, acrylic-modified urethane resin, epoxy-modified acrylic resin, epoxy-modified unsaturated polyester resin, alkyd resin, and phenolic resin. In addition, examples of the thermoplastic resin described above include acrylic ester resin, acrylamide resin, nitrocellulose resin, and polystyrene resin. These resins may be homopolymers or copolymers made up of two or more constituents. Furthermore, these resins may be used independently or two or more of the resins may be used in combination.

The thermosetting resin or the thermoplastic resin described above may contain a metal soap such as various isocyanate compounds, cobalt naphthenate, zinc naphthenate, or the like, an organic peroxide such as benzoyl peroxide, methyl ethyl ketone peroxide, or the like, or a thermosetting agent or an ultraviolet curing agent such as benzophenone, acetophenone, anthraquinone, naphthoquinone, azobisisobutyronitrile, diphenyl sulfide, or the like.

In addition, examples of the ionizing radiation curable resin described above include epoxy-modified acrylate resin, urethane-modified acrylate resin, and acrylic-modified polyester resin, among which urethane-modified acrylate resin is preferable and the urethane-modified acrylate resin represented by the chemical formula described in Japanese Patent Application Laid-open No. 2007-017643 is particularly preferable.

When curing the ionizing radiation curable resin described above, a monofunctional or polyfunctional monomer, oligomer, or the like can be used in combination for the purpose of adjusting a cross-linked structure, viscosity, or the like. Examples of monofunctional monomers include mono (meth)acrylates such as tetrahydrofurfuryl (meth)acrylate, hydroxyethyl (meth)acrylate, vinylpyrrolidone, (meth)acryloyloxyethyl succinate, and (meth)acryloyloxyethyl phthalate. In addition, examples of monomers having two or more functional groups include, based on backbone structure, polyol (meth)acrylates (such as epoxy-modified polyol (meth) acrylate and lactone-modified polyol (meth) acrylate), polyester (meth)acrylates, epoxy (meth)acrylates, urethane (meth)acrylates, and other poly (meth)acrylates with a polybutadiene-based backbone, an isocyanuric acid-based backbone, a hydantoin-based backbone, a melamine-based backbone, a phosphoric acid-based backbone, an imide-based backbone, a phosphazene-based backbone, and the like. Furthermore, various ultraviolet-curable or electron beam-curable monomers, oligomers, and polymers can be used.

More specifically, examples of bifunctional monomers and oligomers include polyethylene glycol di(meth)acrylate, polypropylene glycol di(meth)acrylate, neopentyl glycol di(meth)acrylate, and 1,6-hexanediol di(meth)acrylate. Examples of trifunctional monomers and oligomers include trimethylolpropane (meth)acrylate, pentaerythritol tri(meth)acrylate, and aliphatic tri(meth) acrylate. Examples of tetrafunctional monomers and oligomers include pentaerythritol tetra(meth)acrylate, ditrimethylolpropane tetra(meth)acrylate, and aliphatic tetra(meth)acrylate. In addition, examples of monomers and oligomers having five or more functional groups include dipentaerythritol penta(meth)acrylate and dipentaerythritol hexa(meth)acrylate. Other examples include (meth)acrylates and the like with a polyester backbone, a urethane backbone, or a phosphazene backbone. Although the number of functional groups is not particularly limited, since heat resistance tends to decline when the number of functional groups is less than 3 and flexibility tends to decline when the number of functional groups is more than 20, the number of functional groups particularly preferably ranges from 3 to 20.

While a content of the monofunctional or polyfunctional monomers and oligomers described above can be appropriately adjusted, normally, the content is adjusted to 50 parts by weight or less with respect to 100 parts by weight of the ionizing radiation curable resin and particularly preferably to within a range of 0.5 to 20 parts by weight.

In addition, when necessary, an additive such as a photopolymerization initiator, a polymerization inhibitor, a degradation inhibitor, a plasticizer, a lubricant, a colorant such as a dye or a pigment, a surfactant, an antifoaming agent, a leveling agent, or a thixotropy-imparting agent may be appropriately added to the transparent material for forming the coating layer 14.

The diffraction structure 17a in the incidence portion 15 of the coating layer 14 exhibits a function of causing light L_{λ} in a specific wavelength range from incident light L (for example, white light) from the outside to be incident to the inside of the substrate film 12 or a function of causing light L_{λ} in a specific wavelength range incident from the outside to be incident to the inside of the substrate film 12. When the refractive index of the coating layer 14 is denoted by n and a wavelength of the light L_{λ} to be incident to the inside of the substrate film 12 is denoted by λ, a period P of the diffraction structure 17a in the incidence portion 15 can be expressed by λ/n. The light L_{λ} which approximately advances in a direction of a diffraction grating vector is generated by an interaction between the diffraction structure 17a with the period P and light with the wavelength λ in the incident light L from the outside. For example, when the diffraction structure 17a is a diffraction structure in which irregularities are periodically formed in a concentric pattern, the diffraction grating vector is oriented from a center toward outside of a concentric circle, and when the diffraction structure 17a is a diffraction structure in which irregularities are periodically formed along parallel lines, the diffraction grating vector is oriented orthogonally to the parallel lines. Therefore, the diffraction structure 17b is disposed so as to be positioned in the direction of the diffraction grating vector of the diffraction structure 17a in the incidence portion 15. On the other hand, the diffraction structure 17b in the emission portion 16 is configured to emit the light L_{λ} having been guided inside the substrate film 12 to the outside, and a period P of the diffraction structure 17b can be expressed by λ/n. In addition, a height H of projections of the diffraction structures 17a and 17b of the coating layer 14 can be set within a range of, for example, 1 to 1000 nm, and a thickness T of the coating layer 14 in a region where the diffraction structures 17a and 17b are not positioned can be set within a range of, for example, 500 to 10000 nm.

Note that, in the illustrated example, a plan view shape of the incidence portion 15 is a rectangle, and the diffraction structure 17a in the incidence portion 15 is a diffraction grating in which irregularities are formed in a concentric pattern at a prescribed period P. Therefore, diffraction grating vectors spread radially within a prescribed angle. In addition, the emission portion 16 is positioned within a range of the radial spread of the diffraction grating vectors in the incidence portion 15. A plan view shape of the emission portion 16 is a regular hexagonal shape, the diffraction structure 17b in the emission portion 16 is a diffraction grating in which irregularities are formed in parallel lines at the prescribed period P, and a direction of the diffraction grating vector is oriented toward a part where the incidence portion 15 is positioned. It should be noted that the plan view shapes of the incidence portion 15 and the emission portion 16 and patterns of the diffraction structures 17a and 17b are not limited to the illustrated examples.

Alternatively, in the light guide film 11, the emission portion 16 may not include the diffraction structure 17b and may not have wavelength selectivity. In this case, the emission portion 16 may be constituted by an irregular structure positioned in a desired part of the coating layer 14 or a desired part (a planar shape) of the coating layer 14 may constitute the emission portion 16 as-is and, in either case, light having been incident from the incidence portion 15 and guided inside the substrate film 12 can be emitted from the emission portion 16.

In addition, when the emission portion 16 has wavelength selectivity, the incidence portion 15 may not include the diffraction structure 17a and may not have wavelength selectivity. In this case, the incidence portion 15 may be constituted by a reflection layer at any position among: a desired part of the coating layer 14; a desired interlayer part between the coating layer 14 and the substrate film 12, and a desired part on the other surface 12b of the substrate film 12. Fig. 4 is a schematic sectional view which shows an example of the light guide film 11 including such a reflection layer and which corresponds to Fig. 2A. In the example shown in Fig. 4, a reflection layer 20 positioned on the coating layer 14 is the incidence portion 15, and incident light L (for example, white light) incident to the light guide film 11 from a side of the substrate film 12 is reflected by the reflection layer 20 and caused to be incident to the inside of the substrate film 12. In addition, light L_{λ} having been wavelength-selected at the emission portion 16 is emitted from light having been guided inside the substrate film 12. Furthermore, even when the reflection layer 20 is positioned in a desired interlayer part between the coating layer 14 and the substrate film 12 as described above, the incident light L incident to the light guide film 11 from the side of the substrate film 12 is reflected by the reflection layer 20 and caused to be incident to the inside of the substrate film 12. On the other hand, when the reflection layer 20 is positioned in a desired part on the other surface 12b of the substrate film 12 as described above, the incident light L incident to the light guide film 11 from a side of the coating layer 14 is reflected by the reflection layer 20 and caused to be incident to the inside of the substrate film 12. Such a reflection layer 20 can be configured as, for example, a thin film of Al or the like. It should be noted that the reflection layer 20 can be provided at a location other than the incidence portion 15. For example, a hologram that is another counterfeit preventing means can be formed in a part of the light guide film 11 and the reflection layer 20 can be provided at a location overlapping, in a plan view, a location where the hologram is formed, in which case incident light can be appropriately guided to the hologram.

In addition, as another example of the incidence portion 15 in a case where the emission portion 16 has wavelength selectivity but the incidence portion 15 does not include the diffraction structure 17a and does not have wavelength selectivity, the incidence portion 15 may be constituted by an irregular structure positioned in a desired part of the coating layer 14 or a desired part (a planer shape) of the coating layer 14 may constitute the incidence portion 15 as-is. As long as an irregular structure of which a thickness varies due to depressions, projections, and the like is present on the coating layer 14, this portion can constitute the incidence portion 15 and exhibit a function of causing incident light L (for example, white light) from the outside to be incident to the inside of the substrate film 12. In addition, by causing incident light L (for example, white light) to be incident at high light intensity to the incidence portion 15 (a planar shape) configured on the coating layer 14, the incident light L can be caused to be incident to the inside of the substrate film 12.

Furthermore, when the emission portion 16 has wavelength selectivity but the incidence portion 15 does not include the diffraction structure 17a and does not have wavelength selectivity, the coating layer 14 need not be present in the incidence portion 15. Therefore, a desired part of the substrate film 12 may constitute the incidence portion 15.

The high refractive index layer 18 positioned on the coating layer 14 is a thin film which has a higher refractive index than the refractive index of the coating layer 14 and which is provided in order to enable light to be more readily guided inside the substrate film 12. The high refractive index layer 18 described above may be made of a transparent material having a higher refractive index than the refractive index of the coating layer 14 and can be formed by, for example, a vacuum deposition method using materials such as metals including Mg, Ti, Cr, Fe, Co, Ni, Cu, Zn, Ga, Ge, Se, Rb, Pd, Ag, Cd, In, Sn, Sb, Te, Au, Pb, and Bi, oxides of these metals, or sulfides of these metals such as ZnS. In addition, the high refractive index layer 18 may be a laminated structure constituted by a plurality of layers formed using two or more materials among the materials described above. Furthermore, the high refractive index layer 18 positioned in the incidence portion 15 and the high refractive index layer 18 positioned in the emission portion 16 may be made of materials that differ from one another.

A thickness of the high refractive index layer 18 described above can be set to within a range of, for example, 1 to 300 nm. While the high refractive index layer 18 is positioned so as to cover an entire region of the coating layer 14 in the illustrated example, alternatively, the high refractive index layer 18 may be positioned so as to cover a part of the coating layer 14. For example, the high refractive index layer 18 may be positioned so as to cover the incidence portion 15 and the emission portion 16 and to cover a part corresponding to an optical waveguide path along which light is guided inside the substrate film 12 from the incidence portion 15 to the emission portion 16. Alternatively, the high refractive index layer 18 may be positioned in the irregularities of the diffraction structures 17a and 17b on surfaces of the projections and surfaces of the depressions positioned between the projections but not on side wall surfaces of the projections. Furthermore, the light guide film 11 according to the present invention may not include the high refractive index layer 18.

It should be noted that the high refractive index layer 18 need not be positioned on the coating layer 14. For example, the high refractive index layer 18 need only be provided at at least any of positions: on the coating layer 14; between the coating layer 14 and the one surface 12a of the substrate film 12; and on the other surface 12b of the substrate film 12.

The light guide film 11 configured as described above is capable of displaying a pattern of light emitted from the emission portion 16 in a desired color. For example, when the diffraction structure 17a in the incidence portion 15 of the coating layer 14 is configured so as to be capable of causing light in a green wavelength range to be incident to the inside of the substrate film 12 and the diffraction structure 17b in the emission portion 16 is configured so as to be capable of emitting, to the outside, light in a green wavelength range guided inside the substrate film 12, by causing white light or light in a green wavelength range to be incident to the incidence portion 15 of the light guide film 11, a pattern of light in a green wavelength range can be displayed at the emission portion 16. In addition, since the light guide film 11 does not use a light-emitting dye, a counterfeit prevention function can be stably exhibited without causing a decline in display performance due to degradation over time. It should be noted that a pattern is a concept that encompasses characters, symbols, figures, and images.

While the light guide film 11 described above includes the coating layer 14, the light guide film 11 is not limited to this embodiment and, for example, the incidence portion 15 and the emission portion 16 may be provided on the one surface 12a of the substrate film 12 without providing the coating layer 14 as shown in Fig. 2B. The light guide film 11 shown in Fig. 2B shares a similar configuration to the light guide film 11 shown in Fig. 2A with the exception of the incidence portion 15 and the emission portion 16 being provided on the one surface 12a of the substrate film 12 and the coating layer 14 not being provided. Therefore, detailed descriptions of the respective components (the substrate film 12, the incidence portion 15, the emission portion 16, and the high refractive index layer 18) of the light guide film 11 shown in Fig. 2B will be omitted. It should be noted that, in the light guide film 11 shown in Fig. 2B, the high refractive index layer 18 need not be provided, and an overcoat layer (a protective layer: not illustrated) may be provided on the one surface 12a of the substrate film 12, wherein the overcoat layer is constituted by a transparent material such as a resin containing nanoparticles of a metal oxide, a polymer obtained by polymerizing a zirconium acrylate monomer, a polymer obtained by polymerizing a hafnium acrylate monomer, or a copolymer obtained by copolymerizing a zirconium acrylate monomer and a hafnium acrylate monomer. The transparent material constituting the overcoat layer (the protective layer) is preferably a material having a desired refractive index difference with the substrate film 12.

In the light guide film 11 shown in Fig. 2B, a method of forming the diffraction structures 17a and 17b as the incidence portion 15 and the emission portion 16 on the one surface 12a of the substrate film 12 is not particularly limited. For example, the substrate film 12 (a raw material of the substrate film 12) on which the diffraction structures 17a and 17b as the incidence portion 15 and the emission portion 16 are formed may be manufactured by bringing a molten-state resin material (a resin material constituting the substrate film 12) extruded from a die into contact with a roll having an irregular structure corresponding to the diffraction structures 17a and 17b. In addition, the substrate film 12 on which the diffraction structures 17a and 17b as the incidence portion 15 and the emission portion 16 are formed may be manufactured by shaping the one surface 12a of the substrate film 12 using a plate having an irregular structure corresponding to the diffraction structures 17a and 17b.

Fig. 5A is a plan view showing another embodiment of the light guide film according to the present invention. A light guide film 11' shown in Fig. 5A is similar to the light guide film 11 (refer to Figs. 1, 2A, and 2B) described above with the exception of having the incidence portion 15 at three locations and having the emission portion 16 corresponding to each incidence portion 15 at three locations. In the light guide film 11' described above, by causing white light or light in a prescribed wavelength range to be incident to a desired incidence portion 15 among the incidence portions 15 at the three locations, a pattern of light in the prescribed wavelength range can be displayed at the emission portion 16 corresponding to the incidence portion 15 to which the light had been incident.

It should be noted that, while three pairs of a combination of the incidence portion 15 and the emission portion 16 are provided in parallel in Fig. 5A, the number of combinations and the arrangement of the incidence portion 15 and the emission portion 16 are not limited to the illustrated example. In addition, while the emission portions 16 are configured so as to produce patterns of the same shape (a regular hexagonal shape) in Fig. 5A, the emission portions 16 are not limited thereto and, for example, each emission portion 16 may produce a different pattern.

Furthermore, as shown in Fig. 5B, the number of incidence portions 15 and the number of emission portions 16 in the light guide film 11' need not be the same and, for example, the light guide film 11' may have the incidence portion 15 at three locations and have the emission portion 16 at one location. The light guide film 11' shown in Fig. 5B shares a similar configuration to the light guide film 11 described above with the exception of having the incidence portion 15 at three locations. In the light guide film 11' described above, by causing white light or light in a prescribed wavelength range to be incident to any incidence portion 15 among the incidence portions 15 at the three locations, a pattern of light in the prescribed wavelength range can be displayed at the emission portion 16 so as to correspond to the incidence portion 15 to which the light had been incident. For example, in a case where each of the incidence portions 15 at the three locations have the diffraction structure 17a which are capable of causing light in mutually different wavelength ranges to be incident, when white light or light in a prescribed wavelength range is caused to be incident to each incidence portion 15, patterns of light in mutually different wavelength ranges can be displayed at the emission portion 16, and when white light or light in a prescribed wavelength range is caused to be simultaneously incident to all of the incidence portions 15 at the three locations, a pattern of a color mixture of light in different wavelength ranges can be displayed. In addition, by configuring the emission portion 16 so as to be capable of emitting light in different wavelength ranges by, for example, including a plurality of diffraction structures 17b with mutually different periods, patterns with respectively different shapes can be displayed at the emission portion 16 when white light or light in a prescribed wavelength range is caused to be incident to each incidence portion 15.

It should be noted that, while the light guide film 11' shown in Fig. 5B has the incidence portion 15 at three locations and the emission portion 16 at one location, the number of the incidence portions 15 and the emission portion 16 are not limited to the numbers described above.

Fig. 6 is a plan view showing another embodiment of the light guide film according to the present invention. A light guide film 11" shown in Fig. 6 is similar to the light guide film 11 (refer to Figs. 1, 2A, and 2B) described above with the exception of having the incidence portion 15 at one location and having the emission portion 16 at three locations within a range of spread of a diffraction grating vector of the diffraction structure 17a in the incidence portion 15. In the light guide film 11" described above, by causing white light or light in a prescribed wavelength range to be incident to the incidence portion 15, a pattern of light in the prescribed wavelength range can be simultaneously displayed at the emission portions 16 at the three locations.

It should be noted that, while the emission portion 16 is provided at three locations in Fig. 6, the number and the arrangement of the emission portions 16 are not limited to the illustrated example. In addition, while the emission portions 16 are configured so as to produce patterns of the same shape (a regular hexagonal shape) in Fig. 6, the emission portions 16 are not limited thereto and, for example, each emission portion 16 may produce a different pattern.

In the embodiment of the light guide film described above, display at the emission portion can be performed by light in a prescribed wavelength range or, in other words, display can be performed in a single color. Next, an embodiment which enables multicolor display will be described.

Fig. 7 is a plan view showing another embodiment of the light guide film according to the present invention, and Fig. 8 is a schematic sectional view taken along line II-II of the light guide film shown in Fig. 7.

In Figs. 7 and 8, a light guide film 21 includes a substrate film 22, a coating layer 24 positioned on one surface 22a of the substrate film 22, and a high refractive index layer 28 positioned on the coating layer 24. While the high refractive index layer 28 is positioned so as to cover an entire region of the coating layer 24 in Fig. 7, the high refractive index layer 18 is not limited thereto. In addition, in Fig. 8, in order to prevent the drawing from becoming overcomplicated, hatched lines indicating a cross section are omitted and the high refractive index layer 28 is indicated by a bold line.

The substrate film 22 constituting the light guide film 21 can be configured in a similar manner to the substrate film 12 constituting the light guide film 11 (refer to Figs. 1 and 2A) described above, and a description thereof will be omitted here. In addition, the high refractive index layer 28 positioned on the coating layer 24 can also be configured in a similar manner to the high refractive index layer 18 constituting the light guide film 11 (refer to Figs. 1 and 2A) described above.

The coating layer 24 constituting the light guide film 21 has a diffraction structure 27a to constitute an incidence portion 25 at three locations and has a diffraction structure 27b to constitute an emission portion 26 at three locations, and the diffraction structures 27a and 27b have irregularities in a thickness direction of the substrate film 22.

The incidence portions 25 positioned at the three locations include: an incidence portion 25R for causing light L_{λR} with a wavelength λR in a red region to be incident to the inside of the substrate film 22 from incident light L from the outside; an incidence portion 25G for causing light L_{λG} with a wavelength λG in a green region to be incident to the inside of the substrate film 22 from the incident light L from the outside; and an incidence portion 25B for causing light L_{λB} with a wavelength λB in a blue region to be incident to the inside of the substrate film 22 from the incident light L from the outside. Periods P of the diffraction structures 27a positioned in the respective incidence portions 25R, 25G, and 25B are respectively set to λR/n, XG/n, and λB/n, where n denotes a refractive index of the coating layer 24. Note that, in Fig. 7, projections of the diffraction structures 27a positioned in the incidence portions 25R, 25G, and 25B are respectively indicated by dash lines, dash-dot lines, and dash-dot-dot lines for the sake of convenience.

In addition, the emission portions 26 positioned at the three locations include: an emission portion 26R for emitting, to the outside, the light L_{λR} with the wavelength λR in the red region having been guided inside the substrate film 22; an emission portion 26G for emitting, to the outside, the light L_{λG} with the wavelength λG in the green region having been guided inside the substrate film 22; and an emission portion 26B for emitting, to the outside, the light L_{λB} with the wavelength λB in the blue region having been guided inside the substrate film 22. Periods P of the diffraction structures 27b positioned in the respective emission portions 26R, 26G, and 26B are respectively set to λR/n, XG/n, and λB/n. Furthermore, the emission portions 26R, 26G, and 26B are respectively disposed so as to be positioned in directions of diffraction grating vectors of the diffraction structures 27a in the incidence portions 25R, 25G, and 25B (a direction indicated by an arrow a in Fig. 7 represents a central direction of the diffraction grating vectors). Therefore, the incidence portion 25R and the emission portion 26R are configured so as to form a pair, the incidence portion 25G and the emission portion 26G are configured so as to form a pair, the incidence portion 25B and the emission portion 26B are configured so as to form a pair, and the respective pairs are disposed in parallel. In Fig. 7, projections of the diffraction structures 27b positioned in the emission portions 26R, 26G, and 26B are respectively indicated by dash lines, dash-dot lines, and dash-dot-dot lines for the sake of convenience.

It should be noted that a height H of projections (a depth of depressions) of the diffraction structures 27a and 27b of the coating layer 24 and a thickness of the coating layer 24 in a region where the diffraction structures 27a and 27b are not positioned can be set in a similar manner to the coating layer 14 constituting the light guide film 11 described above.

The light guide film 21 configured as described above is capable of displaying a pattern of light emitted from the emission portions 26 in multiple colors. For example, by causing white light to be incident to the incidence portion 25R of the coating layer 24, a pattern of light in the red wavelength range can be displayed at the emission portion 26R. In a similar manner, by causing white light to be incident to the incidence portion 25G, a pattern of light in the green wavelength range can be displayed at the emission portion 26G, and by causing white light to be incident to the incidence portion 25B, a pattern of light in the blue wavelength range can be displayed at the emission portion 26B. In addition, since the light guide film 21 does not use a light-emitting dye, a counterfeit prevention function can be stably exhibited without causing a decline in display performance due to degradation over time. In Figs. 7 and 8, the light L_{λR} with the wavelength λR in the red region is indicated by a dash line, the light L_{λG} with the wavelength λG in the green region is indicated by a dash-dot line, and the light L_{λB} with the wavelength λB in the blue region is indicated by a dash-dot-dot line for the sake of convenience.

It should be noted that, while the three pairs of a combination of the incidence portion 25 and the emission portion 26 are provided in parallel in Fig. 7, the number of combinations and the arrangement of the incidence portion 25 and the emission portion 26 are not limited to the illustrated example. In addition, while the emission portions 26 are configured so as to produce patterns of the same shape (a regular hexagonal shape) in Fig. 7, the emission portions 26 are not limited thereto and, for example, a different pattern may be produced for each display color.

Furthermore, since the emission portions 26R, 26G, and 26B described above respectively have wavelength selectivity with respect to light in a specific wavelength range, the incidence portion 25 need not have wavelength selectivity. In this case, the incidence portion 25 may be constituted by a reflection layer in a desired part of the coating layer 24, in a desired interlayer part between the coating layer 24 and the substrate film 22, or in a desired part on the other surface 22b of the substrate film 22. In addition, the incidence portion 25 may be constituted by an irregular structure positioned in a desired part of the coating layer 24 or a desired part (a planer shape) of the coating layer 24 may constitute the incidence portion 25 as-is. Both of these incidence portions 25 exhibit a function of causing incident light L (for example, white light) from the outside to be incident to the inside of the substrate film 22.

In addition, conversely, since the incidence portions 25R, 25G, and 25B described above respectively have wavelength selectivity with respect to light in a specific wavelength range, the emission portion 26 need not have wavelength selectivity. For example, the emission portion 26 may be configured on the coating layer 14 as a portion of which a thickness varies due to depressions, projections, and the like, and light incident from the incidence portions 25R, 25G, and 25B and having been guided inside the substrate film 22 may be emitted from the emission portion 26.

The light guide film 21 shown in Figs. 7 and 8 may not be provided with the coating layer 24 and the incidence portion 25 and the emission portion 26 may be provided in a desired part on the one surface 22a of the substrate film 22. In this case, the high refractive index layer 28 may be provided on the one surface 22a of the substrate film 22 or, alternatively, an overcoat layer (a protective layer) may be provided on the one surface 22a of the substrate film 22, the overcoat layer (a protective layer) being constituted by a transparent material such as a resin containing nanoparticles of a metal oxide, a polymer obtained by polymerizing a zirconium acrylate monomer, a polymer obtained by polymerizing a hafnium acrylate monomer, or a copolymer obtained by copolymerizing a zirconium acrylate monomer and a hafnium acrylate monomer.

Fig. 9 is a plan view showing another embodiment of the light guide film according to the present invention, and Fig. 10 is a schematic sectional view taken along line III-III of the light guide film shown in Fig. 9.

In Figs. 9 and 10, a light guide film 31 includes a substrate film 32, a coating layer 34 positioned on one surface 32a of the substrate film 32, and a high refractive index layer 38 positioned on the coating layer 34. While the high refractive index layer 38 is positioned so as to cover an entire region of the coating layer 34 in Fig. 9, the high refractive index layer 18 is not limited thereto. In addition, in Fig. 10, in order to prevent the drawing from becoming overcomplicated, hatched lines indicating a cross section are omitted and the high refractive index layer 38 is indicated by a bold line.

The substrate film 32 constituting the light guide film 31 can be configured in a similar manner to the substrate film 12 constituting the light guide film 11 (refer to Figs. 1 and 2A) described above, and a description thereof will be omitted here. In addition, the high refractive index layer 38 positioned on the coating layer 34 can also be configured in a similar manner to the high refractive index layer 18 constituting the light guide film 11 (refer to Figs. 1 and 2A) described above.

The coating layer 34 constituting the light guide film 31 has a diffraction structure 37a to constitute an incidence portion 35 at three locations and has a diffraction structure 37b to constitute an emission portion 36 at three locations, and the diffraction structures 37a and 37b have irregularities in a thickness direction of the substrate film 32.

The incidence portions 35 positioned at the three locations include incidence portions 35R, 35G, and 35B, and the respective incidence portions 35R, 35G, and 35B correspond to the incidence portions 25R, 25G, and 25B which constitute the light guide film 21 described above. In addition, the emission portions 36 positioned at the three locations include emission portions 36R, 36G, and 36B, and the respective emission portions 36R, 36G, and 36B correspond to the emission portions 26R, 26G, and 26B which constitute the light guide film 21 described above. Note that, in Fig. 9, projections of the diffraction structures 37a positioned in the incidence portions 35R, 35G, and 35B and projections of the diffraction structures 37b positioned in the emission portions 36R, 36G, and 36B are respectively indicated by dash lines, dash-dot lines, and dash-dot-dot lines for the sake of convenience.

The incidence portions 35R, 35G, and 35B are respectively disposed in series so that directions of diffraction grating vectors of the diffraction structures 37a (a direction indicated by an arrow a in Fig. 9 represents a central direction of the diffraction grating vectors) coincide with one another. In addition, the emission portions 36R, 36G, and 36B are disposed in series so as to be positioned in the direction of the diffraction grating vectors of the diffraction structures 37a in the incidence portions 35R, 35G, and 35B. Furthermore, the incidence portion 35R and the emission portion 36R are configured so as to form a pair, the incidence portion 35G and the emission portion 36G are configured so as to form a pair, and the incidence portion 35B and the emission portion 36B are configured so as to form a pair. Therefore, the respective pairs are disposed in series so that optical waveguide paths thereof partially overlap with one another.

The light guide film 31 configured as described above is capable of displaying a pattern of light emitted from the emission portions 36 in multiple colors . For example, by causing white light to be incident to the incidence portion 35R of the coating layer 34, a pattern of light in the red wavelength range can be displayed at the emission portion 36R. In a similar manner, by causing white light to be incident to the incidence portion 35G, a pattern of light in the green wavelength range can be displayed at the emission portion 36G, and by causing white light to be incident to the incidence portion 35B, a pattern of light in the blue wavelength range can be displayed at the emission portion 36B. In addition, since the light guide film 31 does not use a light-emitting dye, a counterfeit prevention function can be stably exhibited without causing a decline in display performance due to degradation over time. In Figs. 9 and 10, light L_{λR} with a wavelength λR in the red region is indicated by a dash line, light I_{λG} with a wavelength λG in the green region is indicated by a dash-dot line, and light L_{λB} with a wavelength λB in the blue region is indicated by a dash-dot-dot line for the sake of convenience.

It should be noted that, while the three pairs of a combination of the incidence portion 35 and the emission portion 36 are provided in series in Fig. 9, the number of combinations and the arrangement of the incidence portion 35 and the emission portion 36 are not limited to the illustrated example. In addition, while the emission portions 36 are configured so as to produce patterns of the same shape (a regular hexagonal shape) in Fig. 9, the emission portions 36 are not limited thereto and, for example, a different pattern may be produced for each display color.

Furthermore, since the emission portions 36R, 36G, and 36B described above respectively have wavelength selectivity with respect to light in a specific wavelength range, the incidence portion 35 need not have wavelength selectivity. In this case, the incidence portion 35 may be constituted by a reflection layer at any of: a desired part of the coating layer 34; a desired interlayer part between the coating layer 34 and the substrate film 32; and a desired part on the other surface 32b of the substrate film 32. In addition, the incidence portion 35 may be constituted by an irregular structure positioned in a desired part of the coating layer 34 or a desired part (a planer shape) of the coating layer 34 may constitute the incidence portion 35 as-is. Both of these incidence portions 35 exhibit a function of causing incident light L (for example, white light) from the outside to be incident to the inside of the substrate film 32.

It should be noted that the light guide film 31 shown in Figs. 9 and 10 may not be provided with the coating layer 34 and the incidence portion 35 and the emission portion 36 may be provided in a desired part on the one surface 32a of the substrate film 32. In this case, the high refractive index layer 38 may be provided on the one surface 32a of the substrate film 32 or, alternatively, an overcoat layer (a protective layer) may be provided on the one surface 32a of the substrate film 32, the overcoat layer (a protective layer) being constituted by a transparent material such as a resin containing nanoparticles of a metal oxide, a polymer obtained by polymerizing a zirconium acrylate monomer, a polymer obtained by polymerizing a hafnium acrylate monomer, or a copolymer obtained by copolymerizing a zirconium acrylate monomer and a hafnium acrylate monomer.

Fig. 11 is a plan view showing another embodiment of the light guide film according to the present invention, and Fig. 12 is a schematic sectional view taken along line IV-IV of the light guide film shown in Fig. 11.

In Figs. 11 and 12, a light guide film 41 includes a substrate film 42, a coating layer 44 positioned on one surface 42a of the substrate film 42, and a high refractive index layer 48 positioned on the coating layer 44. While the high refractive index layer 48 is positioned so as to cover an entire region of the coating layer 44 in Fig. 11, the high refractive index layer 18 is not limited thereto. In addition, in Fig. 12, in order to prevent the drawing from becoming overcomplicated, hatched lines indicating a cross section are omitted and the high refractive index layer 48 is indicated by a bold line.

The substrate film 42 constituting the light guide film 41 can be configured in a similar manner to the substrate film 12 constituting the light guide film 11 (refer to Figs. 1 and 2A) described above, and a description thereof will be omitted here. In addition, the high refractive index layer 48 positioned on the coating layer 44 can also be configured in a similar manner to the high refractive index layer 18 constituting the light guide film 11 (refer to Figs. 1 and 2A) described above.

The coating layer 44 constituting the light guide film 41 has a diffraction structure 47a to constitute an incidence portion 45 at three locations and has a diffraction structure 47b to constitute an emission portion 46 at three locations, and the diffraction structures 47a and 47b have irregularities in a thickness direction of the substrate film 42.

The incidence portions 45 positioned at the three locations are constituted by mutually adjacent incidence portions 45R, 45G, and 45B. The incidence portions 45R, 45G, and 45B respectively correspond to the incidence portions 25R, 25G, and 25B which constitute the light guide film 21 described above. In addition, the incidence portion 45R is disposed so that a direction of a diffraction grating vector of the diffraction structure 47a is oriented toward a position at which the emission portion 46R to be described later is disposed. In a similar manner, the incidence portion 45G is disposed so that a direction of a diffraction grating vector of the diffraction structure 47a is oriented toward a position at which the emission portion 46G to be described later is disposed, and the incidence portion 45B is disposed so that a direction of a diffraction grating vector of the diffraction structure 47a is oriented toward a position at which the emission portion 46B to be described later is disposed. Note that, in Fig. 11, projections of the diffraction structures 47a positioned in the incidence portions 45R, 45G, and 45B are respectively indicated by dash lines, dash-dot lines, and dash-dot-dot lines for the sake of convenience.

In this case, the incidence portions 45R, 45G, and 45B described above being mutually adjacent encompasses both a state where the incidence portions are in contact with each other and a state where the incidence portions are separated from each other. When the incidence portions are separated from each other, intervals between the adjacent incidence portions are preferably within a range of, for example, 1 to 1000 µm. This description will similarly apply to the subsequent embodiments and to cases where the emission portions are mutually adjacent.

In addition, the emission portions 46 positioned at the three locations include emission portions 46R, 46G, and 46B, and the respective emission portions 46R, 46G, and 46B correspond to the emission portions 26R, 26G, and 26B which constitute the light guide film 21 described above. The emission portions 46R, 46G, and 46B are disposed in parallel with respect to the incidence portion 45 in which the incidence portions 45R, 45G, and 45B are disposed mutually adjacent to one another. Note that, in Fig. 11, projections of the diffraction structures 47b positioned in the emission portions 46R, 46G, and 46B are respectively indicated by dash lines, dash-dot lines, and dash-dot-dot lines for the sake of convenience.

In the light guide film 41 configured as described above, by causing white light to be incident to the incidence portion 45 in which the incidence portions 45R, 45G, and 45B are disposed mutually adjacent to one another, a pattern of light in the red wavelength range, a pattern of light in the green wavelength range, and a pattern of light in the blue wavelength range can be simultaneously displayed at the emission portions 46R, 46G, and 46B. Specifically, light L_{λR} with a wavelength λR in the red region incident to the inside of the substrate film 42 from the incidence portion 45R is emitted from the emission portion 46R and a pattern of light in the red wavelength range is displayed. In a similar manner, light L_{λG} with a wavelength λG in the green region incident to the inside of the substrate film 42 from the incidence portion 45G is emitted from the emission portion 46G and a pattern of light in the green wavelength range is displayed, and light L_{λB} with a wavelength λB in the blue region incident to the inside of the substrate film 42 from the incidence portion 45B is emitted from the emission portion 46B and a pattern of light in the blue wavelength range is displayed. Alternatively, the light L_{λR} with the wavelength λR in the red region, the light L_{λG} with the wavelength λG in the green region, and the light L_{λB} with the wavelength λB in the blue region respectively incident to the inside of the substrate film 42 from the mutually adjacent incidence portions 45R, 45G, and 45B may be mixed during a process of being guided inside the substrate film 42 and, subsequently, specific wavelengths may be selected once again in the emission portions 46R, 46G, and 46B to cause the light L_{λR} with the wavelength λR in the red region, the light L_{λG} with the wavelength λG in the green region, and the light L_{λB} with the wavelength λB in the blue region to be respectively emitted.

Since the light guide film 41 described above does not use a light-emitting dye, a counterfeit prevention function can be stably exhibited without causing a decline in display performance due to degradation over time. In Figs. 11 and 12, the light L_{λR} with the wavelength λR in the red region is indicated by a dash line, the light L_{λG} with the wavelength λG in the green region is indicated by a dash-dot line, and the light L_{λB} with the wavelength λB in the blue region is indicated by a dash-dot-dot line for the sake of convenience.

It should be noted that the number and the arrangement of the incidence portions 45R, 45G, and 45B which are mutually adjacent and which constitute the incidence portion 45 are not limited to the illustrated example. In addition, while the emission portions 46 are configured so as to produce patterns of the same shape (a regular hexagonal shape) in Fig. 11, the emission portions 46 are not limited thereto and, for example, a different pattern may be produced for each display color.

Furthermore, since the emission portions 46R, 46G, and 46B described above respectively have wavelength selectivity with respect to light in a specific wavelength range, the incidence portion 45 need not have wavelength selectivity. In this case, the incidence portion 45 may be constituted by a reflection layer positioned in any of: a desired part of the coating layer 44; a desired interlayer part between the coating layer 44 and the substrate film 42; and a desired part on the other surface 42b of the substrate film 42. In addition, the incidence portion 45 may be constituted by an irregular structure positioned in a desired part of the coating layer 44 or a desired part (a planer shape) of the coating layer 44 may constitute the incidence portion 45 as-is. Both of these incidence portions 45 exhibit a function of causing incident light L (for example, white light) from the outside to be incident to the inside of the substrate film 42.

In addition, conversely, since the incidence portions 45R, 45G, and 45B described above respectively have wavelength selectivity with respect to light in a specific wavelength range, the emission portion 46 need not have wavelength selectivity. For example, the emission portion 46 may be configured on the coating layer 44 as a portion of which a thickness varies due to depressions, projections, and the like, and light incident from the incidence portions 45R, 45G, and 45B and having been guided inside the substrate film 42 may be emitted from the emission portion 46.

It should be noted that the light guide film 41 shown in Figs. 11 and 12 may not be provided with the coating layer 44 and the incidence portion 45 and the emission portion 46 may be provided in a desired part on the one surface 42a of the substrate film 42. In this case, the high refractive index layer 48 may be provided on the one surface 42a of the substrate film 42 or, alternatively, an overcoat layer (a protective layer) may be provided on the one surface 42a of the substrate film 42, the overcoat layer (a protective layer) being constituted by a transparent material such as a resin containing nanoparticles of a metal oxide, a polymer obtained by polymerizing a zirconium acrylate monomer, a polymer obtained by polymerizing a hafnium acrylate monomer, or a copolymer obtained by copolymerizing a zirconium acrylate monomer and a hafnium acrylate monomer.

Fig. 13 is a plan view showing another embodiment of the light guide film according to the present invention.

In Fig. 13, a light guide film 51 includes a substrate film 52, a coating layer 54 positioned on one surface of the substrate film 52, and a high refractive index layer 58 positioned on the coating layer 54. While the high refractive index layer 58 is positioned so as to cover an entire region of the coating layer 54 in Fig. 13, the high refractive index layer 18 is not limited thereto.

The substrate film 52 constituting the light guide film 51 can be configured in a similar manner to the substrate film 12 constituting the light guide film 11 (refer to Figs. 1 and 2A) described above, and a description thereof will be omitted here. In addition, the high refractive index layer 58 positioned on the coating layer 54 can also be configured in a similar manner to the high refractive index layer 18 constituting the light guide film 11 (refer to Figs. 1 and 2A) described above.

The coating layer 54 constituting the light guide film 51 has a diffraction structure 57a to constitute an incidence portion 55 at nine locations and has a diffraction structure 57b to constitute an emission portion 56 at 25 locations, and the diffraction structures 57a and 57b have irregularities in a thickness direction of the substrate film 52.

The incidence portions 55 positioned at the nine locations are respectively constituted by incidence portions 55R, 55G, and 55B positioned at three locations, and the respective incidence portions 55R, 55G, and 55B are disposed mutually adjacent so as to form a grid and to constitute a single incidence portion 55. The incidence portions 55R, 55G, and 55B respectively correspond to the incidence portions 25R, 25G, and 25B which constitute the light guide film 21 described above. In addition, the incidence portions 55R positioned at the three locations are disposed such that a set of spread ranges of diffraction grating vectors of the diffraction structures 57a in the incidence portions 55R at the three locations encompass the emission portions 56 positioned at the 25 locations. In a similar manner, the incidence portions 55G positioned at the three locations are disposed such that a set of spread ranges of diffraction grating vectors of the diffraction structures 57a in the incidence portions 55G at the three locations encompass the emission portions 56 positioned at the 25 locations, and the incidence portions 55B positioned at the three locations are disposed such that a set of spread ranges of diffraction grating vectors of the diffraction structures 57a in the incidence portions 55B at the three locations encompass the emission portions 56 positioned at the 25 locations. Note that, in Fig. 13, projections of the diffraction structures 57a positioned in the incidence portions 55R, 55G, and 55B are respectively indicated by dash lines, dash-dot lines, and dash-dot-dot lines for the sake of convenience.

In addition, the emission portions 56 positioned at the 25 locations include emission portions 56R, 56G, and 56B, and the respective emission portions 56R, 56G, and 56B correspond to the emission portions 26R, 26G, and 26B which constitute the light guide film 21 described above. The emission portions 56R, 56G, and 56B described above are disposed mutually adjacent in a grid pattern so as to display a desired pattern in the three colors of red (R), green (G), and blue (B) and, accordingly, constitute a single emission portion 56 as a whole. Therefore, the number and the arrangement of the emission portions 56R, 56G, and 56B can be appropriately set in accordance with a pattern constituted by the three display colors. Note that, in Fig. 13, projections of the diffraction structures 57b positioned in the emission portions 56R, 56G, and 56B are respectively indicated by dash lines, dash-dot lines, and dash-dot-dot lines for the sake of convenience.

With the light guide film 51 according to the present invention described above, by causing white light to be incident to the single incidence portion 55 in which the respective incidence portions 55R, 55G, and 55B are disposed mutually adjacent in a grid, display in the plurality of colors of red, green, and blue can be performed at the emission portion 56 in which the emission portions 56R, 56G, and 56B are disposed mutually adjacent at desired positions so as to form a grid pattern. Specifically, since light L_{λR} with a wavelength λR in the red region incident to the inside of the substrate film 52 from the three incidence portions 55R is emitted from the emission portion 56R disposed at a desired position, light L_{λG} with a wavelength λG in the green region incident to the inside of the substrate film 52 from the three incidence portions 55G is emitted from the emission portion 56G disposed at a desired position, and light L_{λB} with a wavelength λB in the blue region incident to the inside of the substrate film 52 from the three incidence portions 55B is emitted from the emission portion 56B disposed at a desired position, and patterns of light in the respective wavelength ranges of red, green, and blue are displayed, display can be performed in the three colors. Alternatively, the light L_{λR} with the wavelength λR in the red region, the light L_{λG} with the wavelength λG in the green region, and the light L_{λB} with the wavelength λB in the blue region respectively incident to the inside of the substrate film 52 from the mutually adjacent incidence portions 55R, 55G, and 55B may be mixed during a process of being guided inside the substrate film 52 and, subsequently, specific wavelengths may be selected once again in the emission portions 56R, 56G, and 56B to cause the light L_{λR} with the wavelength λR in the red region, the light L_{λG} with the wavelength λG in the green region, and the light L_{λB} with the wavelength λB in the blue region to be respectively emitted.

Since the light guide film 51 described above does not use a light-emitting dye, a counterfeit prevention function can be stably exhibited without causing a decline in display performance due to degradation over time. In Fig. 13, the light L_{λR} with the wavelength λR in the red region is indicated by a dash line, the light L_{λG} with the wavelength λG in the green region is indicated by a dash-dot line, and the light L_{λB} with the wavelength λB in the blue region is indicated by a dash-dot-dot line for the sake of convenience.

It should be noted that, while the incidence portion 55 is constituted by the incidence portion 55R at the three locations, the incidence portion 55G at the three locations, and the incidence portion 55B at the three locations in Fig. 13, the numbers and the arrangements of the incidence portions 55R, 55G, and 55B are not limited to the illustrated example. In addition, while a pattern is formed at the emission portions 56 provided at the 25 locations in Fig. 13, the number of the emission portions 56 that form a pattern and a shape, a dimensional ratio, and the like of each emission portion 56 are not limited thereto.

It should be noted that the light guide film 51 shown in Fig. 13 may not be provided with the coating layer 54 and the incidence portion 55 and the emission portion 56 may be provided in a desired part on the one surface 52a of the substrate film 52. In this case, the high refractive index layer 58 may be provided on the one surface 52a of the substrate film 52 or, alternatively, an overcoat layer (a protective layer) may be provided on the one surface 52a of the substrate film 52, the overcoat layer (a protective layer) being constituted by a transparent material such as a resin containing nanoparticles of a metal oxide, a polymer obtained by polymerizing a zirconium acrylate monomer, a polymer obtained by polymerizing a hafnium acrylate monomer, or a copolymer obtained by copolymerizing a zirconium acrylate monomer and a hafnium acrylate monomer.

The embodiments of the light guide film described above are only exemplary, and the light guide film according to the present invention is not limited to the embodiments. For example, the light guide film may not include a high refractive index layer. In addition, depending on an application of the light guide film, for example, the light guide film may be configured such that a release layer is interposed between the substrate film and the coating layer.

Furthermore, while light emitted from the emission portions 56R, 56G, and 56B are red (R), green (G), and blue (B) and display can be performed in these three colors in the light guide film 51 described above, the light emitted from an emission portion is not limited to any of red (R), green (G), and blue (B) and may be, for example, a single color such as yellow or blue-green, a mixed color of red (R) and green (G), or a mixed color of green (G) and blue (B) .

In addition, there may be a part in which the coating layer is not present on the substrate film as long as incidence of light from the incidence portion, guiding of light inside the substrate film from the incidence portion to the emission portion, and emission of light from the emission portion can be performed. For example, when the coating layer has a plurality of emission portions, a plurality of the coating layers may be present on the substrate film in a plan view and one or more emission portions may be positioned on each coating layer. Furthermore, when the light guide film has a plurality of emission portions, the coating layer may be present in a part of the emission portions but the coating layer may be absent from the other emission portions.

Since the light guide film described above does not use a light-emitting dye, a counterfeit prevention function can be stably exhibited without causing a decline in display performance due to degradation over time. In addition, since a light-emitting dye need not be caused to emit light, for example, display can be performed with white light irradiated from an LED light source with relatively low light intensity. Furthermore, since a light-emitting dye is not used, an increase in manufacturing cost due to an increase in manufacturing steps or an increase in material cost can be suppressed.

### [Structure for counterfeit prevention]

A structure for counterfeit prevention according to the present invention uses the light guide film described above.

Fig. 14 is a schematic sectional view showing an embodiment of the structure for counterfeit prevention according to the present invention. A structure for counterfeit prevention 101 shown in Fig. 14 represents an example which uses the light guide film 11 shown in Figs. 1 to 3, and includes the light guide film 11 and an adhesion layer 102 positioned on an outermost surface of the light guide film 11 on a side of the coating layer 14.

The adhesion layer 102 is positioned on the high refractive index layer 18 included in the light guide film 11 and serves to bond the light guide film 11 to an article that is an object to which a counterfeit prevention function is imparted. As an adhesive that forms the adhesion layer 102, a heat sealing adhesive, a pressure sensitive adhesive, a sticky adhesive, and the like can be appropriately selected in accordance with an application of the structure for counterfeit prevention. The adhesion layer 102 also exhibits a function as a buffer layer which prevents the diffraction structures 17a and 17b included in the coating layer 14 of the light guide film 11 from coming into contact with, and damaging, the article that is an object of bonding of the structure for counterfeit prevention 101. A thickness of the adhesion layer 102 can be set such that the adhesion layer 102 is present on the diffraction structures 17a and 17b within a range of, for example, 0.1 to 100 µm.

The structure for counterfeit prevention 101 is capable of imparting a counterfeit prevention function to a desired article by being bonded to the article via the adhesion layer 102. In other words, for example, authenticity determination can be performed by irradiating the incidence portion 15 of the structure for counterfeit prevention 101 bonded to a target article with light from an LED light source with relatively low light intensity and determining whether or not a pattern is displayed at the emission portion 16 in a prescribed color.

Fig. 15 is a schematic sectional view showing another embodiment of the structure for counterfeit prevention. A structure for counterfeit prevention 111 shown in Fig. 15 represents an example which uses the light guide film 11 shown in Figs. 1 to 3, and includes the light guide film 11, an adhesion layer 112 positioned on an outermost surface of the light guide film 11 on a side of the coating layer 14, and an adhesion layer 113 positioned on a side of the substrate film 12.

The adhesion layer 112 is positioned on the high refractive index layer 18 included in the light guide film 11 and is formed using a heat sealing adhesive. The adhesion layer 112 preferably exhibits a function as a buffer layer which prevents the diffraction structures 17a and 17b included in the coating layer of the light guide film 11 from coming into contact with, and damaging, the target article, and a thickness of the adhesion layer 112 can be set such that the adhesion layer 112 is present on the diffraction structures 17a and 17b within a range of, for example, 0.1 to 100 µm. In addition, the adhesion layer 113 is also formed using a heat sealing adhesive and a thickness thereof can be set within a range of, for example, 0.1 to 100 µm.

For example, by mixing the structure for counterfeit prevention 111 into paper in a paper-making stage, heat applied during a calendering process causes the adhesion layers 112 and 113 made of a heat sealing adhesive to exhibit adhesion to pulp. Accordingly, a counterfeit prevention function can be imparted by incorporating the light guide film 11 as a thread.

It should be noted that, in the structure for counterfeit prevention 101 described above, when the adhesion layer 102 is formed using a heat sealing adhesive, the structure for counterfeit prevention 101 can impart a counterfeit prevention function as a light guide film thread by being mixed into paper in a paper-making stage in a similar manner to the structure for counterfeit prevention 111.

Fig. 16 is a schematic sectional view showing another embodiment of the structure for counterfeit prevention. A structure for counterfeit prevention 121 shown in Fig. 16 represents an example that uses the light guide film 11 shown in Figs. 1 to 3 in which a release layer 19 is interposed between the substrate film 12 and the coating layer 14. The structure for counterfeit prevention 121 includes an adhesion layer 122 on an outermost surface of the light guide film 11 on a side of the coating layer 14.

The release layer 19 can be formed by appropriately selecting a release agent in consideration of a quality of material of the substrate film 12 and a material of the coating layer 14 such that a sticking force between the release layer 19 and the substrate film 12 is smaller than a sticking force between the release layer 19 and the coating layer 14.

The adhesion layer 122 is positioned on the high refractive index layer 18 included in the light guide film 11 and is formed using a heat sealing adhesive or the like. The adhesive used can be appropriately selected from known adhesives such that an adhesive force with a transfer target article is larger than the sticking force between the release layer 19 and the substrate film 12 described above. Since the substrate film 12 is released and removed after the structure for counterfeit prevention 121 is bonded to the transfer target article, a thickness of the adhesion layer 122 can be set in consideration of a refractive index of the adhesion layer 122 so that light L_{λ} in a specific wavelength range is incident to the inside of the coating layer 14 from light L incident from the incidence portion 15 of the light guide film 11. In addition, when the transfer target article is a transparent base, the thickness of the adhesion layer 122 can be set in consideration of a refractive index of the transfer target article so that, after the structure for counterfeit prevention 121 is transferred to the transfer target article, light Lx in a specific wavelength range is incident to the inside of the transfer target article from light L incident from the incidence portion 15 of the light guide film 11.

The structure for counterfeit prevention 121 is capable of imparting a counterfeit prevention function to a desired article by being bonded to the article via the adhesion layer 122 and subsequently releasing and removing the substrate film 12. In other words, for example, authenticity determination can be performed by irradiating the incidence portion 15 of the structure for counterfeit prevention 121 having been transferred to a target article with white light from an LED light source with relatively low light intensity and determining whether or not a pattern is displayed at the emission portion 16 in a prescribed color.

The structure for counterfeit prevention described above is capable of imparting, to a target article, a stable counterfeit prevention function which is capable of displaying a pattern of light emitted from an emission portion in a desired color or as a multicolor image.

The embodiments of the structure for counterfeit prevention described above are only exemplary, and the structure for counterfeit prevention according to the present invention is not limited to the embodiments. For example, any of the light guide films 21, 31, 41, and 51 described above may be used in place of the light guide film 11 or a light guide film 11 which does not include the coating layer 14 shown in Fig. 2B may be used.

### [Counterfeit-proof article]

A counterfeit-proof article according to the present invention uses the light guide film described above or the structure for counterfeit prevention described above. In this case, for example, a counterfeit-proof article is a concept including: paper currency; ID cards such as a passport, an identification card, a driver's license, and a health insurance card; and media (counterfeit-proof media) imparted with a counterfeit prevention function including securities such as a bank card and a credit card.

Fig. 17 is a plan view showing an embodiment of a counterfeit-proof article, Fig. 18 is a schematic sectional view which is taken along line V-V of the counterfeit-proof article shown in Fig. 17 and in which a part of a constituent layer is separated, and Fig. 19 is a partially enlarged sectional view taken along line VI-VI of the counterfeit-proof article shown in Fig. 17.

A counterfeit-proof article 201 shown in Figs. 17 to 19 includes the light guide film 11 according to the present invention and represents an example using the structure for counterfeit prevention 111 shown in Fig. 15. The counterfeit-proof article 201 includes a laminated body constituted by a plurality of bases 202, print layers 203 and 203' provided on the base 202 that constitutes an outermost layer of the laminated body, the structure for counterfeit prevention 111 arranged on a side of the print layer 203, a transparent base 204 arranged so as to cover the structure for counterfeit prevention 111, and a transparent base 204' arranged on the opposite-side print layer 203'.

Examples of a material of the base 202 include vinyl chloride, polyethylene terephthalate, and polycarbonate, and the material of the base 202 can be appropriately selected in accordance with an application of the counterfeit-proof article 201 without any particular limitations. While only two bases 202 constituting outermost layers of the laminated body made up of the plurality of bases 202 are shown in the illustrated example, the number of the bases 202 can be appropriately set.

The print layers 203 and 203' may be provided on an entire surface of the base 202 or may be provided in a part of the base 202.

In addition, a region in a thickness direction where the structure for counterfeit prevention 111 is present in the counterfeit-proof article 201 (a region enclosed by a dash-dot line in Fig. 18) may be configured as a transparent window portion. Such a counterfeit-proof article 201 can be fabricated by using a transparent material as the bases 202 and by not providing the print layers 203 and 203' in a region to be configured as the transparent window portion. Alternatively, a laminated body constituted by the plurality of bases 202 may be formed so that a region to become the transparent window portion is configured as an opening and a transparent base may be fitted into the opening. With such a counterfeit-proof article 201, light can be caused to be incident to the structure for counterfeit prevention 111 from both front and rear directions.

In addition, the structure for counterfeit prevention 111 may be arranged with front and back sides reversed from the state shown in Fig. 19.

The counterfeit-proof article 201 described above can be manufactured by thermal fusion bonding in a state where the structure for counterfeit prevention 111 is sandwiched by the transparent base 204, the print layer 203, and the base 202.

The counterfeit-proof article 201 enables authenticity determination to be performed by, for example, irradiating the incidence portion 15 with white light from an LED light source with relatively low light intensity and determining whether or not a pattern is displayed at the emission portion 16 in a prescribed color.

Fig. 20 is a plan view showing another embodiment of the counterfeit-proof article, and Fig. 21 is a partially enlarged sectional view taken along line VII-VII of the counterfeit-proof article shown in Fig. 20. A counterfeit-proof article 211 shown in Figs. 20 and 21 includes the light guide film 11 shown in Fig. 2A in a state where the substrate film 12 is not present and represents an example using the structure for counterfeit prevention 121 shown in Fig. 16. The counterfeit-proof article 211 can be fabricated by bonding the structure for counterfeit prevention 121 to a card base 212 via the adhesion layer 122 and subsequently releasing and removing the substrate film 12.

The counterfeit-proof article 211 enables authenticity determination to be performed by, for example, irradiating the incidence portion 15 with white light from an LED light source with relatively low light intensity and determining whether or not a pattern is displayed at the emission portion 16 in a prescribed color.

Fig. 22 is a plan view showing paper currency which represents a specific example of another embodiment of the counterfeit-proof article (a counterfeit-proof medium), and Fig. 23 is a partially enlarged sectional view taken along line VIII-VIII of the paper currency as the counterfeit-proof article (a counterfeit-proof medium) shown in Fig. 22.

As shown in Figs. 22 and 23, paper currency 221 as a counterfeit-proof article (a counterfeit-proof medium) includes a base 222 such as biaxially oriented polypropylene (BOPP) and the light guide film 11 bonded to a desired position on one surface of the base 222 via the adhesion layer 122. The light guide film 11 has the high refractive index layer 18, the coating layer 14, and the release layer 19 laminated in this order from a side of the adhesion layer 122 but does not include the substrate film 12. The paper currency 221 can be fabricated by bonding the structure for counterfeit prevention 121 shown in Fig. 16 to the base 222 via the adhesion layer 122 and subsequently releasing and removing the substrate film 12.

In the paper currency 221, as shown in Fig. 23, light L incident from the incidence portion 15 is guided while being reflected by an interface between another surface of the base 222 and outside and by an interface between the release layer 19 and the outside, and outgoing light L_{λ} is emitted from the emission portion 16. For example, when the incidence portion 15 is irradiated with white light from an LED light source with relatively low light intensity, a pattern in a prescribed color is displayed at the emission portion 16. Accordingly, authenticity determination of the paper currency 221 can be performed. It should be noted that, although most of the light L incident from the incidence portion 15 is conceivably reflected at the interface between the other surface of the base 222 and the outside which have a largest refractive index difference and at the interface between the release layer 19 and the outside, a part of the light is conceivably also reflected at an interface between the base 222 and the adhesion layer 122, at an interface between the adhesion layer 122 and the high refractive index layer 18, and the like.

The paper currency 221 as a counterfeit-proof article (a counterfeit-proof medium) may be configured by providing the incidence portion 15 and the emission portion 16 at a desired position of the base 222 such as biaxially oriented polypropylene (BOPP) or by bonding the light guide film 11 shown in Fig. 2B to the desired position via the adhesion layer 122.

Fig. 24 is a plan view showing an ID card which represents a specific example of another embodiment of the counterfeit-proof article (the counterfeit-proof medium), Fig. 25 is a sectional view taken along line IX-IX of the ID card as the counterfeit-proof article (the counterfeit-proof medium) shown in Fig. 24, and Figs. 26 and 27 are sectional views which are taken along a line corresponding to line IX-IX in Fig. 24 and which shows another mode of the counterfeit-proof article shown in Figs. 24 and 25.

As shown in Figs. 24 and 25, an ID card 231 as a counterfeit-proof article (a counterfeit-proof medium) is configured such that a laminated body including: a card base 232 configured by laminating a first print layer 2321, a first core sheet layer 2322, a second core sheet layer 2323, a second print layer 2324, and a laser color development layer 2325 in this order; and the light guide film 11 bonded to a desired position on a side of the laser color development layer 2325 via the adhesion layer 122 is coated by a first over-sheet layer 233 and a second over-sheet layer 234 so as to be sandwiched therebetween from above and below in a direction of lamination. The light guide film 11 has the high refractive index layer 18 and the coating layer 14 laminated in this order from a side of the adhesion layer 122 but does not include the substrate film 12. The ID card 231 can be fabricated by forming a through-hole which penetrates the card base 232 in the direction of lamination in a desired position of the card base 232, fitting a transparent resin layer 235 into the through-hole, bonding, via the adhesion layer 122, the structure for counterfeit prevention 121 shown in Fig. 16 to the card base 232 fitted with the transparent resin layer 235, and subsequently releasing and removing the substrate film 12.

Alternatively, as shown in Fig. 26, the ID card 231 may be configured such that the transparent resin layer 235 is not provided and a laminated body including the light guide film 11 bonded onto the laser color development layer 2325 of the card base 232 via the adhesion layer 122 is coated by the first over-sheet layer 233 and the second over-sheet layer 234 so as to be sandwiched therebetween from above and below in the direction of lamination. Alternatively, as shown in Fig. 27, the ID card 231 may be configured such that a laminated body including the transparent resin layer 235 and the light guide film 11 bonded onto the transparent resin layer 235 via the adhesion layer 122 is fitted into a through-hole which is formed at a desired position of the card base 232 and which penetrates the card base 232 in the direction of lamination, and the card base 232 fitted with the laminated body is coated by the first over-sheet layer 233 and the second over-sheet layer 234 so as to be sandwiched therebetween from above and below in the direction of lamination.

In the ID card 231, as shown in Figs. 25 to 27, light L incident from the incidence portion 15 is guided while being reflected by an interface between the first over-sheet layer 233 and outside and by an interface between the second over-sheet layer 234 and the outside, and outgoing light Lx is emitted from the emission portion 16. For example, when the incidence portion 15 is irradiated with white light from an LED light source with relatively low light intensity, a pattern in a prescribed color is displayed at the emission portion 16. Accordingly, authenticity determination of the ID card 231 can be performed. It should be noted that, although most of the light L incident from the incidence portion 15 is conceivably reflected at the interface between the first over-sheet layer 233 and the outside and the interface between the second over-sheet layer 234 and the outside which have a largest refractive index difference, a part of the light is conceivably also reflected at interfaces between the respective layers in the card base 232 and the like.

Alternatively, in the ID card 231 as a counterfeit-proof article (a counterfeit-proof medium) shown in Figs. 25 and 27, instead of the light guide film 11 positioned on the transparent resin layer 235 fitted into the through-hole formed at a desired position of the card base 232, the incidence portion 15 and the emission portion 16 may be directly provided on the transparent resin layer 235 or the light guide film 11 shown in Fig. 2B (the light guide film 11 not including the coating layer 14) may be provided.

In the ID card 231 as a counterfeit-proof article (a counterfeit-proof medium) shown in Figs. 25 to 27, instead of the light guide film 11, the incidence portion 15 and the emission portion 16 may be directly provided on the first over-sheet layer 233 or the second over-sheet layer 234. In addition, a release layer and a heat seal layer may be laminated in this order from the side of the coating layer 14 between the coating layer 14 and the second over-sheet layer 234. Furthermore, an order of lamination of the respective layers (the first print layer 2321, the first core sheet layer 2322, the second core sheet layer 2323, the second print layer 2324, and the laser color development layer 2325) which constitute the card base 232 is not particularly limited as long as functions of the respective layers can be exhibited. Moreover, the card base 232 may not include one of or both the first print layer 2321 and the second print layer 2324.

The embodiments of the counterfeit-proof article described above are only exemplary, and the counterfeit-proof article according to the present invention is not limited to the embodiments. For example, the light guide film included in the counterfeit-proof article is not limited to the light guide film 11 and the counterfeit-proof article may include any of the light guide films 21, 31, 41, and 51 described above or may include the light guide films 21, 31, 41, or 51 in a state where the substrate film 22, 32, 42, or 52 is not present.

In addition, the counterfeit-proof article according to the present invention may include the light guide film 11 according to the present invention as a thread by, for example, mixing the structure for counterfeit prevention 111 according to the present invention into paper in a paper-making stage. Such a thread may be continuously arranged on one surface of the made sheet of paper or the thread may be arranged so as to be periodically exposed such that at least the incidence portion 15 and the emission portion 16 of the light guide film 11 is positioned on the one surface of the sheet of paper and other parts of the light guide film 11 are positioned inside the sheet of paper. Furthermore, the thread may be arranged so as to be alternately exposed on the one surface and the other surface of the made sheet of paper and, at the same time, arranged such that at least the incidence portion 15 and the emission portion 16 of the light guide film 11 are positioned at the exposed parts.

The counterfeit-proof article according to the present invention described above is capable of displaying a pattern of light emitted from an emission portion in a desired color or as a multicolor image and, at the same time, the counterfeit-proof article according to the present invention described above includes a stable counterfeit prevention function and enables authenticity determination to be readily performed.

### [Industrial Applicability]

The present invention is useful in various articles and products which require a counterfeit prevention function and in a field of manufacturing such articles and products and the like.

### [Reference Signs List]

11, 21, 31, 41, 51 Light guide film
12, 22, 32, 42, 52 Substrate film
14, 24, 34, 44, 54 Coating layer
15, 25, 35, 45, 55 Incidence portion
16, 26, 36, 46, 56 Emission portion
17a, 17b, 27a, 27b, 37a, 37b, 47a, 47b, 57a, 57b Diffraction structure
18, 28, 38, 48, 58 High refractive index layer
19 Release layer
20 Reflection layer
101, 111, 121 Structure for counterfeit prevention
102, 112, 113, 122 Adhesion layer
201, 211 Counterfeit-proof article

## Claims

1. A light guide film (11, 21, 31, 41, 51), comprising:
a substrate film (12, 22, 32, 42, 52);
a coating layer (14, 24, 34, 44, 54) positioned in at least a part of one surface of the substrate film;
an incidence portion (15, 25, 35, 45, 55) which causes incident light from outside to be incident to the inside of the substrate film;
an emission portion (16, 26, 36, 46, 56) which emits, to the outside, light in a specific wavelength range in light that has been incident from the incidence portion and guided inside the substrate film; and
a high refractive index layer (18, 28, 38, 48, 58) having a higher refractive index than a refractive index of the coating layer, wherein
the emission portion is constituted by a diffraction structure (17b, 27b, 37b, 47b, 57b) having irregularities in a thickness direction of the substrate film in a desired part of the coating layer, and
the high refractive index layer is provided on the coating layer.

2. The light guide film according to claim 1, wherein
the incidence portion is at least one of:
an incidence portion constituted by a diffraction structure (17a, 27a, 37a, 47a, 57a) having irregularities in a thickness direction of the substrate film in a desired part of the coating layer;
an incidence portion constituted by a reflection layer (20) positioned in any of a desired part of the coating layer, a desired interlayer part between the coating layer and the substrate film, and a desired part on a surface opposite to the one surface of the substrate film;
an incidence portion constituted by an irregular structure positioned in a desired part of the coating layer;
an incidence portion that is a desired part of the coating layer; and
an incidence portion that is a desired part of the substrate film.

3. The light guide film according to claim 1 or 2, wherein
the coating layer has a plurality of the emission portions, and
in at least a part of the plurality of the emission portions, wavelength ranges of emitted light differ from each other among the emission portions.

4. The light guide film according to any one of claims 1 to 3, wherein
the coating layer has a plurality of the incidence portions, and
in at least a part of the plurality of the incidence portions, wavelength ranges of light caused to be incident to the inside of the substrate film differ from each other among the incidence portions.

5. The light guide film according to claim 4, wherein the plurality of the incidence portions are adjacent to one another.

6. The light guide film according to any one of claims 3 to 5, wherein the plurality of the emission portions are adjacent to one another.

7. A structure for counterfeit prevention (100, 111, 121), comprising:
the light guide film according to any one of claims 1 to 6; and an adhesion layer (102, 112, 113, 122) positioned on an outermost surface of the light guide film on a side of the coating layer.

8. The structure for counterfeit prevention according to claim 7, comprising an adhesion layer on a side of the substrate film of the light guide film.

9. The structure for counterfeit prevention according to claim 7, wherein a release layer (19) is interposed between the substrate film and the coating layer of the light guide film.

10. A counterfeit-proof article (201, 211), comprising the light guide film according to any one of claims 1 to 6.

11. A counterfeit-proof article, comprising the structure for counterfeit prevention according to claim 7 or 8 in a desired part.

## Patentansprüche

1. Lichtleiterfilm bzw. -folie (11, 21, 31, 41, 51), umfassend:
einen Substratfilm bzw. eine Substratfolie (12, 22, 32, 42, 52);
eine Beschichtungsschicht (14, 24, 34, 44, 54), die in zumindest einem Teil einer Fläche bzw. Oberfläche des Substratfilms positioniert ist;
einen Einfallsabschnitt (15, 25, 35, 45, 55), der bewirkt, dass einfallendes Licht von außen auf die Innenseite des Substratfilms einfällt;
einen Emissionsabschnitt (16, 26, 36, 46, 56), der Licht in einem spezifizierten Wellenlängenbereich in Licht, das von dem Einfallsabschnitt eingefallen ist und innerhalb des Substratfilms geführt wird, nach außen emittiert; und
eine hochbrechende Schicht bzw. Schicht mit hohem Brechungsindex (18, 28, 38, 48, 58), die einen höheren Brechungsindex als ein Brechungsindex der Beschichtungsschicht aufweist, wobei
der Emissionsabschnitt aus einer Beugungsstruktur (17b, 27b, 37b, 47b, 57b) besteht, die in einer Dickenrichtung des Substratfilms in einem gewünschten Teil der Beschichtungsschicht Unregelmäßigkeiten aufweist, und
die Schicht mit hohem Brechungsindex auf der Beschichtungsschicht bereitgestellt ist.

2. Lichtleiterfilm nach Anspruch 1, wobei
der Einfallsabschnitt zumindest einer ist von:
einem Einfallsabschnitt, der aus einer Beugungsstruktur (17a, 27a, 37a, 47a, 57a) besteht, die in einer Dickenrichtung des Substratfilms in einem gewünschten Teil der Beschichtungsschicht Unregelmäßigkeiten aufweist;
einem Einfallsabschnitt, der aus einer Reflexionsschicht (20) besteht, die in einem eines gewünschten Teils der Beschichtungsschicht, eines gewünschten Zwischenschichtteils zwischen der Beschichtungsschicht und dem Substratfilm und eines gewünschten Teils auf einer Fläche bzw. Oberfläche gegenüberliegend bzw. entgegengesetzt zu der einen Oberfläche des Substratfilms positioniert ist;
einem Einfallsabschnitt, der aus einer unregelmäßigen Struktur besteht, die in einem gewünschten Teil der Beschichtungsschicht positioniert ist;
einem Einfallsabschnitt, der ein gewünschter Teil der Beschichtungsschicht ist; und
einem Einfallsabschnitt, der ein gewünschter Teil des Substratfilms ist.

3. Lichtleiterfilm nach Anspruch 1 oder 2, wobei
die Beschichtungsschicht eine Mehrzahl von Emissionsabschnitten aufweist, und
in zumindest einem Teil der Mehrzahl der Emissionsabschnitte sich Wellenlängenbereiche von emittiertem Licht unter den Emissionsabschnitten voneinander unterscheiden.

4. Lichtleiterfilm nach einem der Ansprüche 1 bis 3, wobei
die Beschichtungsschicht eine Mehrzahl von Einfallsabschnitten aufweist, und
in zumindest einem Teil der Mehrzahl der Einfallsabschnitte sich Wellenlängenbereiche von Licht, das zum Einfallen auf die Innenseite des Substratfilms veranlasst wird, unter den Einfallsabschnitten voneinander unterscheiden.

5. Lichtleiterfilm nach Anspruch 4, wobei die Mehrzahl von Einfallsabschnitten angrenzend bzw. benachbart zueinander sind.

6. Lichtleiterfilm nach einem der Ansprüche 3 bis 5, wobei die Mehrzahl von Emissionsabschnitten angrenzend bzw. benachbart zueinander sind.

7. Struktur zur Fälschungsprävention bzw. -sicherheit (100, 111, 121), umfassend:
den Lichtleiterfilm bzw. die Lichtleiterfolie nach einem der Ansprüche 1 bis 6;
und eine Haftschicht (102, 112, 113, 122), die auf bzw. an einer äußersten Fläche bzw. Oberfläche des Lichtleiterfilms auf einer Seite der Beschichtungsschicht positioniert ist.

8. Struktur zur Fälschungsprävention nach Anspruch 7, umfassend eine Haftschicht auf einer Seite des Substratfilms des Lichtleiterfilms.

9. Struktur zur Fälschungsprävention nach Anspruch 7, wobei eine Ablöse- bzw. Trennschicht (19) zwischen dem Substratfilm und der Beschichtungsschicht des Lichtleiterfilms angeordnet ist.

10. Fälschungssicherer Artikel (201, 211), umfassend den Lichtleiterfilm bzw. die Lichtleiterfolie nach einem der Ansprüche 1 bis 6.

11. Fälschungssicherer Artikel, umfassend die Struktur zur Fälschungsprävention nach Anspruch 7 oder 8 in einem gewünschten Teil.

## Revendications

1. Film de guidage de lumière (11, 21, 31, 41, 51) comportant :
un film de substrat (12, 22, 32, 42, 52) ;
une couche de revêtement (14, 24, 34, 44, 54) positionnée dans au moins une partie d'une surface du film de substrat ;
une portion d'incidence (15, 25, 35, 45, 55) qui amène la lumière incidente provenant de l'extérieur à être incidente sur l'intérieur du film de substrat ;
une portion d'émission (16, 26, 36, 46, 56) qui émet vers l'extérieur la lumière dans une plage de longueurs d'onde spécifique de lumière ayant été incidente depuis la portion d'incidence et guidée à l'intérieur du film de substrat, et
une couche (18, 28, 38, 48, 58) à indice de réfraction élevé, qui présente un indice de réfraction plus élevé qu'un indice de réfraction de la couche de revêtement,
dans lequel
la portion d'émission est constituée par une structure de diffraction (17b, 27b, 37b, 47b, 57b) ayant des irrégularités dans une direction d'épaisseur du film de substrat dans une partie souhaitée de la couche de revêtement, et
la couche à fort indice de réfraction est prévue sur la couche de revêtement.

2. Film de guidage de lumière selon la revendication 1, dans laquelle :
la portion d'incidence :
est une portion d'incidence formée par une structure de diffraction (17a, 27a, 37a, 47a, 57a) ayant des irrégularités dans une direction d'épaisseur du film de substrat dans une partie souhaitée de la couche de revêtement ; et/ou
est une portion d'incidence formée par une couche réfléchissante (20) positionnée dans l'une quelconque d'une partie souhaitée de la couche de revêtement, d'une partie intermédiaire souhaitée entre la couche de revêtement et le film de substrat, et d'une partie souhaitée sur une surface opposée à ladite une surface du film de substrat ; et/ou
est une portion d'incidence constituée par une structure d'irrégularité positionnée dans une partie souhaitée de la couche de revêtement ; et/ou
est une portion d'incidence qui est une partie souhaitée de la couche de revêtement ; et/ou
est une portion d'incidence qui est une partie souhaitée du film de substrat.

3. Film de guidage de lumière selon la revendication 1 ou 2, dans lequel
la couche de revêtement a une pluralité des portions d'émission, et
dans au moins une partie de la pluralité des portions d'émission, des plages de longueurs d'onde de lumière émise diffèrent les unes des autres parmi les portions d'émission.

4. Film de guidage de lumière selon l'une quelconque des revendications 1 à 3, dans lequel
la couche de revêtement a une pluralité de portions d'émission, et
dans au moins une partie de la pluralité de portions d'incidence, des plages de longueurs d'onde de lumière amenée à être incidente à l'intérieur de la feuille de substrat diffèrent les unes des autres entre les portions d'incidence.

5. Film de guidage de lumière selon la revendication 4, dans lequel la pluralité des portions d'incidence sont adjacentes les unes aux autres.

6. Film de guidage de lumière selon l'une quelconque des revendications 3 à 5, dans lequel la pluralité des portions d'émission sont adjacentes les unes aux autres.

7. Structure pour la prévention de la contrefaçon (100, 111, 121) comportant :
le film de guidage de lumière selon l'une quelconque des revendications 1 à 6 ; et une couche d'adhérence (102, 112, 113, 122) positionnée sur une surface la plus à l'extérieur du film de guidage de lumière sur un côté de la couche de revêtement.

8. Structure pour la prévention de la contrefaçon selon la revendication 7, comportant une couche d'adhérence sur un côté du film de substrat du film de guidage de lumière.

9. Structure pour la prévention de la contrefaçon selon la revendication 7, dans laquelle une couche de séparation (19) est interposée entre le film de substrat et la couche de revêtement du film de guidage de lumière.

10. Article anti-contrefaçon (201, 211) comportant le film de guidage de lumière selon l'une quelconque des revendications 1 à 6.

11. Article anti-contrefaçon comportant la structure pour la prévention de la contrefaçon selon la revendication 7 ou 8 dans une partie souhaitée.
